# FASCICULE DE BREVET EUROPEEN

(11) **EP 3 004 268 B1**
(45) Date de publication et mention de la délivrance du brevet: **12.04.2017**
(21) Numéro de dépôt: 14732263.0
(22) Date de dépôt: 20.05.2014
(51) Int. Cl.: C09D 175/16, C08J 3/28, C08J 5/18, C09D 173/00, C08G 71/04

(54) **OLIGOMERE URETHANE ACRYLE OU METHACRYLE SANS ISOCYANATE**
ACRYLIERTES ODER METHACRYLIERTES URETHAN-OLIGOMER OHNE ISOCYANAT
ACRYLATED OR METHACRYLATED URETHANE OLIGOMER WITHOUT ISOCYANATE

(30) Priorité: 24.05.2013 FR 1354685
(43) Date de publication de la demande: 13.04.2016
(73) Titulaire: Arkema France, 92700 Colombes (FR)
(72) Inventeur: MONNIER, Guillaume, F-60190 Avrigny (FR); DUQUENNE, Christophe, F-75010 Paris (FR)
(74) Mandataire: Killis, Andréas
(86) Numéro de dépôt international: PCT/FR2014/051173
(87) Numéro de publication internationale: WO 2014/188116

(56) Documents cités:
- FR-A1- 2 293 454
- US-A- 4 758 615
- US-A1- 2013 004 677

## Description

L'invention concerne des nouveaux oligomères uréthanes acrylés ou méthacrylés, monofonctionnels ou multifonctionnels en groupements acrylates et/ou méthacrylates terminaux, avec ladite liaison uréthane étant obtenue sans utilisation aucune d'isocyanate, par réaction carbonate-amine, suivie de modification des hydroxyles en β de la liaison uréthane et réactions successives jusqu'à l'obtention desdits groupements acrylates et/ou méthacrylates. L'invention concerne en particulier un procédé de préparation desdits oligomères, sans aucune utilisation de matières premières toxiques pour la santé humaine et nocives pour l'environnement en général telles que les isocyanates. L'invention concerne également l'utilisation desdits oligomères, en particulier multifonctionnels comme liants réticulables pour compositions de revêtements, de moulage ou d'agents d'étanchéité ou comme macromonomère dans le cas d'oligomères monofonctionnels.

La synthèse actuelle d'oligomères uréthanes (méth)acrylates fait appel à l'utilisation de composés isocyanates, di- ou poly-isocyanates. Ces composés sont toxiques et leur manipulation est dangereuse et donc délicate, demandant des précautions particulières et strictes pour la santé humaine et pour l'environnement en général. De plus, la réaction d'uréthanisation (de formation de liaison uréthane par réaction d'alcool avec un isocyanate) utilise couramment des catalyseurs à base d'étain, composés également toxiques et nocifs pour l'environnement.

Ces dernières années ont vu un développement important de la réaction carbonate-amine comme voie alternative de la formation de liaison uréthane mais sans utilisation d'isocyanates. Cette réaction permet d'accéder à des composés uréthane β-hydroxylés sans libération de composés secondaires (par ex. de méthanol avec l'utilisation de diméthyl carbonate) lorsqu'elle fait intervenir un carbonate cyclique, c'est-à-dire un cycle à 5 ou 6 atomes. On obtient alors des composés dits « Non Isocyanate Polyuréthanes » ou en abrégé « NIPU». Les carbonates sont considérés comme peu dangereux. Il est d'autre part possible de préparer ces carbonates par addition de CO₂ sur une fonction époxy d'un composé époxydé. La préparation desdits carbonates consomme donc du CO₂, lequel est un gaz à effet de serre. Ainsi, sous réserve d'adopter ce mode de préparation, la substitution de la réaction alcool-isocyanate par la réaction carbonate-amine est bénéfique à la fois sur le plan de la sécurité et de l'environnement.

La demande de brevet US 2013/0004677 décrit la synthèse d'oligomères uréthanes (méth)acrylates pour des applications de photoréticulation. Le prépolymère polyuréthane fonctionnalisé amine qui résulte de la réaction amine-carbonate est une chaîne polyuréthane avec un motif répétitif uréthane. Cet allongement de chaîne du prépolymère augmente sa masse moléculaire et donc sa viscosité en solution. D'autre part, le groupement méthacrylate est obtenu par réaction d'addition de Michael des fonctions amines dudit prépolymère NIPU sur le groupement acrylate (seulement) d'un méthacrylate de glycidyle acrylé, ce qui conduit à un NIPU diméthacrylate lequel est peu réactif par photoréticulation. De plus, du fait que la réaction de Michael est limitée aux seuls groupements acrylates, l'obtention des groupements terminaux acrylates est très difficile car il est impossible à partir d'un diacrylate d'éviter la formation d'allongement de chaîne (doublement ou triplement ou plus de la masse moléculaire du prépolymère NIPU) et donc une rapide augmentation de la viscosité des produits finaux. Ceci fait plusieurs limitations pour les produits décrits dans ce document. D'autre part, les hydroxyles en position β de chaque liaison uréthane formée dans ledit prépolymère NIPU auront tendance à s'additionner également sur les groupements acrylates, ce qui rend le contrôle de la réaction et de la structure et sa reproductibilité encore plus difficile.

Il y a donc besoin de nouveaux oligomères uréthane acrylates ou méthacrylates de structure bien contrôlée et reproductible en terme de longueur de chaîne et de fonctionnalité, ces oligomères pouvant être monofonctionnels aussi bien acrylates que méthacrylates et/ou surtout des oligomères multifonctionnels en acrylates et/ou méthacrylates et plus particulièrement de fonctionnalité d'au moins 3, qui sont convenables pour réticuler par voie radicalaire UV ou par peroxyde ou par voie duale, la voie duale étant une voie mixte utilisant un peroxyde par voie thermique et un photoamorceur par voie UV.

La présente invention permet en particulier d'accéder à de tels oligomères uréthanes acrylates ou méthacrylates, sans restriction, tout en utilisant des matières premières non toxiques et amicales vis-à-vis de la santé humaine et de l'environnement en général et facilement disponibles commercialement.

Ces oligomères peuvent présenter plus particulièrement une vitesse de réticulation satisfaisante sous UV et permettre l'obtention de produits finis réticulés, en particulier pour des revêtements, ayant une bonne flexibilité et une dureté qui peut varier en fonction du choix des réactants avec un bon compromis de performances.

Le premier objet de l'invention concerne l'oligomère uréthane nouveau monofonctionnel ou multifonctionnel en groupements uréthanes.

L'invention couvre également un procédé spécifique de préparation sans aucun isocyanate.

Elle concerne aussi des compositions polymérisables comprenant ledit oligomère qui peuvent être plus particulièrement réticulables quand l'oligomère est multifonctionnel, pour revêtements, compositions de moulage ou pour agents d'étanchéité ou pour la préparation de polymères greffés pour oligomère monofonctionnel. Les utilisations liées dudit oligomère dans ce but en tant que liant réticulable ou en tant que macromonomère font également partie de l'invention tout comme les produits finis qui en résultent.

Donc, le premier objet de la présente invention concerne un oligomère uréthane pouvant être linéaire ou ramifié, porteur d'au moins p groupements terminaux acrylates ou méthacrylates, avec ladite liaison uréthane étant obtenue sans utilisation d'isocyanate, par la réaction carbonate-amine entre n moles de monocarbonate, cyclique (III), pour la suite appelé aussi carbonate cyclique et une mole d'une amine (II) de fonctionnalité n en amine primaire (monoamine ou polyamine), avec ensuite, la conversion d'au moins un des n hydroxyles formés en position β de chacune des n liaisons uréthanes et de préférence de tous les hydroxyles formés, en ester-acides par réaction équimolaire avec un composé anhydride cyclique (IV), c'est-à-dire une mole d'anhydride par hydroxyle, réaction suivie par la conversion, avec ici la conversion signifiant conversion totale, desdites fonctions acides, en p groupements terminaux acrylés ou méthacrylés par réaction avec un composé polyépoxydé (V) porteur de m fonctions époxydes avec m égal au moins à 2, dont m' = m-1 groupements époxydes sont convertis en esters acrylates et/ou méthacrylates, avec la fonctionnalité finale p étant d'au moins égale à m' et de préférence p égale à m'*n pour une conversion totale desdits hydroxyles. Si la conversion est partielle x (x < 1), dans ce cas p = m'*x*n. Selon une option préférée de l'invention dudit oligomère selon l'invention, ladite conversion desdits hydroxyles en position β de la liaison uréthane formée est totale avec ladite fonctionnalité globale p étant égale à m'*n. Dans le cas d'une conversion partielle, elle concerne au moins un desdits hydroxyles, ce qui signifie que ledit oligomère doit porter au moins m' = m-1 groupements acrylates et/ou méthacrylates. Il faut préciser que quand la fonctionnalité globale le permet, quand p > 1, un mélange de groupements acrylates et méthacrylates est possible également.

La fonctionnalité globale en acrylates et/ou en méthacrylates dépendra de, et pourra donc être ajustée par, la fonctionnalité n de ladite amine (II) réagissant avec ledit carbonate cyclique (III), formant ainsi par sa réaction avec n composés carbonates cycliques (monocarbonates comme déjà explicité ci-haut) n liaisons uréthanes ayant en position β de chaque liaison uréthane un groupement hydroxyle et donc n groupements hydroxyles formés par mole de ladite amine (II). L'autre facteur dont dépendra la fonctionnalité globale en acrylates et/ou méthacrylates est la fonctionnalité dudit composé polyépoxydé (aussi indiqué époxydé par la suite) avec m fonctions époxydes (ou époxy également pouvant être utilisé). En fait, le composé époxydé, qui réagit avec ladite fonction acide avec une mole de composé époxydé (V) par fonction acide de l'ester-acide qui remplace les hydroxyles convertis, ne réagit qu'avec une seule fonction ou groupement époxyde parmi les m portées au départ. Les m-1 fonctions sont converties préalablement, simultanément ou postérieurement à sa réaction avec ladite fonction acide, en groupements acrylates et/ou méthacrylates respectivement par réaction avec m-1 moles d'acide acrylique ou méthacrylique avec une mole dudit époxyde.

Plus particulièrement, l'oligomère de l'invention peut comprendre ou peut consister en, le produit de formule générale suivante (I) :

R₁[-NH-(C=O)-O-CH(R₂)-(CH₂)ᵣ-CH(R'₂)-O-(O=C)-R₃-(C=O)-O-R₄-R₅(-R₄-R₆)_{m'}]ₙ (I)

avec :
- R₁ : hydrocarbyle de valence n dans ledit composé aminé (II), porteur de n groupements amines -NH₂,
- R₂ ou R'₂ : substituants identiques ou différents et interchangeables dans leur position, pouvant être choisis parmi : H, alkyle, hydroxyalkyle, ledit alkyle étant en C₁ à C₃, avec R₂ et R'₂ pouvant se situer sur deux carbones voisins si r = 0 ou sur deux carbones séparés par un méthylène si r = 1, avec l'ensemble du radical - CH(R₂)-(CH₂)ᵣ-CH(R'₂)- pouvant également représenter un radical cycloalkylène en C₅ ou C₆ et faisant au départ (avant réaction) partie du cycle dudit composé carbonate cyclique (III),
- R₃ : radical alkylène, en particulier en C₂, cycloalkylène ou arylène pouvant être substitués, en particulier par un alkyle parmi méthyle ou éthyle ou par un halogène, comme le chlore ou par un alcoxy ou non substitués, R₃ faisant au départ (avant réaction) partie d'un cycle anhydride d'un composé anhydride cyclique (IV),
- R₄-R₅(-R₄- )_{m'} étant le résidu hydrocarbyle de valence globale m (m' = m-1), correspondant audit composé époxydé (V) après réaction des m groupements époxydes, avec R₄ représentant le radical -CH₂-CH(OH)- dont le précurseur est un groupement époxy (oxirane) et R₅ étant le radical hydrocarbyle de valence m dans ledit composé époxydé (V), porteur au départ de m groupements époxyde (oxirane) précurseur dudit radical R₄, ledit composé (V) pouvant être entre autres une chaîne hydrocarbonée époxydée sur les carbones formant ladite chaîne,
- R₆ : CH₂=C(R₇)-(C=O)-O- étant acrylate quand R₇ : -H ou méthacrylate quand R₇ :-CH₃ ou un mélange de deux groupements, acrylate et méthacrylate, pour p > 1, ledit oligomère étant monofonctionnel, c'est-à-dire ayant p = m'*n égal à 1 ou multifonctionnel, c'est-à-dire ayant p = m'*n égal à 2 ou supérieur à 2.

Ledit oligomère peut être monofonctionnel avec p = m'*n = 1, m' = 1 et n = 1.

Il peut également être multifonctionnel et de fonctionnalité p = m'*n = 2 ou supérieur à 2 avec m' ≥ 1 et n ≥ 2. Selon une autre possibilité d'oligomère de l'invention multifonctionnel, il peut avoir une fonctionnalité p = m'*n = 2 ou supérieure à 2 avec m' ≥ 2 et n ≥ 1.

Dans le cas plus particulier d'oligomère multifonctionnel de l'invention, il peut avoir une fonctionnalité p = m'*n allant de 2 à 32 et de préférence de 2 à 16, plus préférentiellement de 2 à 8 et en particulier de 2 à 6. Ceci dépendra, comme expliqué ci-haut, du choix de la fonctionnalité, essentiellement de la fonctionnalité n de la polyamine (II) impliquée et également de la fonctionnalité m du composé époxydé (V) utilisé.

Comme composé anhydride cyclique (IV) convenable, il peut être sélectionné parmi les monoanhydrides cycliques et en particuliers les suivants : anhydride succinique (R₃ : éthylène), maléique (R₃ : vinylène), phtalique (R₃ : 1,2 phénylène), itaconique, chlorendique, nadique, tetrahydrophtalique, hexahydrophtalique, méthyl hexahydrophtalique, méthyl tetrahydrophtalique, anhydride dicarboxylique naphténique, trimellitique, glutarique, adipique, sébacique, dodécyl succinique et de préférence succinique, maléique, itaconique, phtalique, tetrahydrophtalique, hexahydrophtalique, méthyl hexahydrophtalique, méthyl tetrahydrophtalique.

Concernant le composé carbonate cyclique (III), il s'agit comme expliqué ci-haut d'un monocarbonate cyclique, c'est-à-dire d'un composé portant un seul cycle carbonate. Lesdits carbonates peuvent être formés par réaction d'une mole d'un monoépoxyde avec une mole de dioxyde de carbone (CO₂). Il s'agit d'une voie particulièrement privilégiée dans le contexte de la capture de CO₂ et de la réduction des émissions de ce gaz dans l'atmosphère pour réduire l'échauffement climatique. Tout monoépoxyde transformé par cette voie peut convenir ainsi que, par exemple, tous les glycidyl éthers de monoalcools. Plus particulièrement, peuvent convenir comme carbonates cycliques (III) selon l'invention les carbonates cycliques parmi les carbonates d'éthylène glycol (R₂ = R'₂ : -H et r = 0), de 1,2-propylène diol (R₂ = -H, R'₂ : -CH₃, r = 0), de 1,3-propylène diol (R₂ = R'₂ :-H, r = 1, de glycérol (R₂ : H, R'₂ : -CH₂-OH, r = 0), de 1,2-butane diol (R₂ : -H et R'₂ : -CH₂CH₃), de 2,3-butane diol (R₂ et R'₂ : -CH₃) et 1,3-butane diol (R₂ ou R'₂ = -CH₃ et r = 1) ou le carbonate correspondant à un glycidyl éther d'alcool en C₁-C₄ ou de phénol, par addition de CO₂ sur l'époxyde correspondant et préférentiellement d'éthylène glycol, de 1,2-propylène diol, de glycérol, de 1,2-butane diol.

Comme composé époxydé (V), peut convenir tout époxyde de structure monomère (ou monomérique) ou de structure oligomère (ou oligomérique) linéaire ou ramifiée, dans le cas d'oligomère de préférence de masse moléculaire en nombre Mn inférieure à 1000 et de préférence inférieure à 600 Daltons (toutes les Mn sont en Daltons).

Si ledit composé époxydé (V) est un monomère diépoxyde, il peut être choisi parmi : diglycidyl éther d'éthylène glycol, diglycidyl éther de propylène glycol, diglycidyl éther de butanediol, diglycidyl éther de néopentyl glycol, diglycidyl éther d'hexanediol, diglycidyl éther de cyclohexane diméthanol, diglycidyl éther de bisphénol A (DGEBA) hydrogéné ou non hydrogéné, diglycidyl éther de bisphénol F (DGEBF) hydrogéné ou non hydrogéné, ces composés étant éventuellement alcoxylés, par exemple avec 1 à 4 unités alcoxy comme éthoxy et/ou propoxy ou diglycidyl ester d'acide téréphtalique, diglycidyl ester d'acide tetrahydrophtalique, diglycidyl ester d'acide hexahydrophtalique.

Comme exemple d'époxyde monomère de fonctionnalité plus élevée, ledit composé (V) peut être un triépoxyde sélectionné parmi : triglycidyl éther de triméthylol propane, triglycidyl éther de glycérol, triglycidyl éther d'isocyanurate ou un tetraépoxyde sélectionné parmi : tetraglycidyl éther de pentaérythritol ou le tetraglycidyl éther de ditriméthylol propane ou un hexa fonctionnel comme l'hexaglycidyl éther de dipentaérythritol, tous ces composés étant éventuellement alcoxylés, par exemple avec 1 à 4 unités alcoxy, comme décrit ci-haut.

Ledit composé époxydé (V) peut donc être également une résine époxydée comme les huiles époxydées, en particulier de soja, du polybutadiène époxydé ou un prépolymère de condensation ou d'addition portant des groupements terminaux époxydes (ou époxy oxiranes). La fonctionnalité m de ce composé époxydé doit être d'au moins 2 (au moins diépoxyde appelé aussi diépoxy). Les composés polyépoxydés (V) peuvent être des glycidyl éthers de diols ou de polyols de fonctionnalité supérieure, éventuellement alcoxylés. Les nombre d'unités alcoxy peuvent varier de 1 à 15 et préférentiellement de 1 à 5 par branche époxyde, l'alcoxy étant de préférence ethoxy et/ou propoxy. Comme diépoxydes convenables, on peut citer le DGEBA ou diglycidyl éther de bisphénol A alcoxylé ou non alcoxylé ou le diglycidyl éther d'un diol, par exemple de l'éthylène glycol ou du propylène glycol ou du tetraméthylène diol (butane diol), ces diols pouvant éventuellement être alcoxylés.

Pour des fonctionnalités m plus élevées ayant un intérêt plus particulier et préféré quand on cherche à avoir une fonctionnalité globale en acrylates et/ou méthacrylates la plus élevée, on peut utiliser comme convenables les polyépoxydes de fonctionnalité d'au moins 3. Selon cette option particulière, le polyépoxyde (V) peut être choisi dans ce cas parmi : un triépoxyde sélectionné parmi : triglycidyl éther de triméthylol propane, triglycidyl éther d'isocyanurate, triglycidyl éther de glycérol avec alcoxylation éventuelle ou un tetraépoxyde sélectionné parmi : tetraglycidyl éther de pentaérythritol ou tetraglycidyl éther de ditriméthylol propane éventuellement alcoxylé ou parmi les hexafonctionnels par exemple le glycidyl éther de dipentaérythritol éventuellement alcoxylé.

Plus particulièrement, ledit composé polyépoxydé (V) peut être un oligomère sélectionné parmi : une résine époxydée de masse moyenne en nombre Mn < 1000, de préférence < 600, choisie parmi : résines formophénoliques linéaires ou ramifiées (novolaques) époxydées, huiles époxydées, en particulier huile de soja époxydée, polybutadiène époxydé, prépolymère de condensation ou d'addition époxydé, en particulier précondensat amine-époxy avec terminaisons époxydes.

Concernant ladite amine R₁(NH₂)ₙ (II), elle peut être de structure monomère ou oligomère, de préférence une amine aliphatique en C₂ à C₅₄, en particulier de C₂ à C₃₆ ou une amine aryl aliphatique ou une amine cycloaliphatique.

Comme exemple convenable d'amine aliphatique en C₂ à C₅₄, on peut citer une alkyl monoamine avec alkyl en C₂ à C₅₄, c'est-à-dire comme éthylamine, propyl amine butylamine, pentyl amine, hexylamine heptylamine, octyl amine, nonylamine, décylamine, undécylamine dodécylamine (ou laurylamine) hexadécylamine, octadécylamine, amine grasse en C₂₂ à C₅₄. On peut également citer comme diamines, les alkylènediamines correspondant à ces alkyles. Comme amines aliphatiques, on peut également citer les monoamines ou polyamines dérivés de polyalkylèneimines et en particulier des oligoéthylène imine et/ou oligopropylène imine amines, diamines ou polyamines comportant 2 à 4 unités alkylène imines.

Comme exemple d'amines cycloaliphatiques, on peut citer l'isophorone diamine, la bis (4, 4'-amino cyclohexyl) methylène, la 4, 4'cyclohexylène diamine ou la bis (3,3' méthyl, 4,4' amino cyclohexyl) méthane (BMACM) ou une diamine à base de deux substituants amino-furane sur le diméthyl méthylène d'une diamine de difurfuryle comme décrit dans US 5292903, ces dernières amines étant de source renouvelable à partir de la biomasse. Comme exemples d'amines aryl aliphatiques, on peut citer la toluylylène amine ou la xylylène diamine.

Selon un cas particulièrement préféré d'oligomère selon l'invention, ladite amine R₁(NH₂)ₙ (II) est une mono-uréthane monoamine ou une diuréthane diamine, qui sont les produits de condensation d'une diamine primaire avec respectivement un monocarbonate cyclique qui peut être identique ou différent dudit composé carbonate cyclique (III) tel que défini selon l'invention ci-haut ou un dicarbonate cyclique, c'est-à-dire un composé porteur de deux groupements carbonates cycliques et correspondent à un rapport en groupements amine primaire (-NH₂) sur groupements carbonates cycliques, de 2. Selon ce cas particulier n₁ = n hydroxyles par composé amine (II), sont présents en position β de la liaison uréthane formée par réaction carbonate-amine dans ladite uréthane monoamine ou dans ladite diuréthane diamine et ces n₁ = n hydroxyles sont également convertis, pour au moins un groupement parmi eux (parmi n1 = n) et de préférence totalement (n1 = n parmi n), par réactions successives avec ledit anhydride cyclique (IV) tel que défini ci-haut selon l'invention, en groupements ester-acides suivie par la conversion desdites fonctions acides en au moins m' groupements terminaux acrylés et/ou méthacrylés supplémentaires, par réaction avec ledit composé polyépoxydé (V) tel que défini ci-haut selon l'invention, avec dans ce cas une fonctionnalité supplémentaire en groupements (fonctions) acrylates et/ou méthacrylates dudit oligomère, égale à au moins m' et de préférence pour une conversion totale desdits n1 hydroxyles, avec une fonctionnalité supplémentaire égale à m'*n1 = m'*n. S'il s'agit d'uréthane monoamine, dans ce cas, cette fonctionnalité supplémentaire est égale à m' et si la conversion par réaction avec l'anhydride cyclique (III) des hydroxyles formés par réaction avec le carbonate (III) est totale, dans ce cas, la fonctionnalité globale f sera égale à m'*n+m'*n1 = 2m'*n = 2m' et donc la fonctionnalité globale f dépendra directement de la fonctionnalité m du composé époxydé (V) étant donné que m' = m-1. Par exemple, pour un composé (V) diépoxyde (m = 2) la fonctionnalité globale sera de 2 et pour un triépoxyde de 4. S'il s'agit de diuréthane diamine, dans ce cas, la fonctionnalité p pour une conversion totale sera égale à m'*n = 2m' et la fonctionnalité supplémentaire égale à p = m'*n1 = m'n = 2m' et donc la fonctionnalité globale f sera égale à 2m'*n = 4m'. Par exemple, dans ce dernier cas, si le composé époxydé (V) est un diépoxyde (m = 2 et m' = 1), la fonctionnalité globale f sera de 4 et si un triépoxyde est utilisé comme composé époxydé (V), dans ce cas, la fonctionnalité globale sera égale à 8. Le nombre u de liaisons uréthanes dans ledit oligomère sera égal à u = n + n1 = 2n, ce qui signifie que pour un uréthane monoamine (n = 1), il y aura 2 uréthanes par oligomère et dans le cas d'un diuréthane diamine (n = 2), u sera égal à 4.

Des polyuréthane-polyamines analogues de fonctionnalité n > 2 peuvent également être envisagés comme amine convenable R₁(NH₂)ₙ par réaction entre des polycarbonates porteurs de plus de 2 groupements cycliques par molécule pouvant être obtenus par réaction d'addition de CO₂ sur les fonctions oxiranes de polyépoxydes (ou multiépoxydes) de fonctionnalité correspondante et des diamines avec le rapport en moles de diamine/polycarbonate étant de n (n moles de diamine par mole de polycarbonate). L'intérêt d'une telle option est que le nombre de liaisons uréthanes dans l'oligomère de l'invention est le double de la fonctionnalité n de l'amine ou polyamine (II) et sans aucune utilisation d'isocyanate et de produits nocifs, y compris sans aucune utilisation de catalyseurs à base d'étain lesquels sont couramment utilisés à défaut de cette chimie amine-carbonate. Plus de fonctions uréthanes signifie amélioration des performances de cohésion, de flexibilité, de résistance à l'abrasion et de la durabilité du matériau final à l'usage.

Une autre possibilité particulièrement intéressante concernant le choix de l'amine R₁(-NH₂)ₙ est que ledit radical R₁ puisse porter au moins n2 hydroxyles différents des hydroxyles formés en position β d'une liaison uréthane par réaction amine-carbonate et que lesdits hydroxyles n2 soient également convertis par réactions successives avec ledit anhydride cyclique (IV) tel que défini ci-haut en autant de groupements ester-acides suivie par la conversion desdites fonctions acides en m'n₂ groupements terminaux acrylés ou méthacrylés supplémentaires, par réaction avec ledit composé polyépoxydé (V) tel que défini ci-haut selon la présente invention, avec dans ce cas la fonctionnalité globale en groupements (fonctions) acrylates ou méthacrylates étant ainsi augmentée de m'*n2. Selon cette option, n2 peut varier de 1 à 3 hydroxyles par amine (II). Comme exemples convenables de mono amine (II) avec 1 groupement hydroxyle, on peut citer l'éthanol amine (ou 2-amino éthanol) et avec 2 groupements hydroxyles le 2-amino, 2-méthyl propane 1,3-diol ou le 3-amino, propane 1,2- diol.

Une autre possibilité pour lesdits n1 et n2 hydroxyles potentiellement présents dans l'amine (II) comme décrits ci-haut est qu'au moins un desdits n1 hydroxyles ou n2 hydroxyles tels que définis selon l'invention plus haut, sont convertis auxdits acrylates ou méthacrylates avec la fonctionnalité supplémentaire respective étant, dans ce cas, d'au moins m'. Cela signifie que la conversion desdits hydroxyles peut ne pas être totale, auquel cas il y aura présence dans l'oligomère final jusqu'à n1-1 = n-1 et n2-1 hydroxyles libres par oligomère de l'invention.

De même, selon une version particulière, il est possible que des hydroxyles provenant de la réaction de ladite amine (II) avec ledit carbonate (III) ne soient pas tous convertis en acrylates ou méthacrylates (avec au moins un desdits n hydroxyles étant effectivement converti). Ceci n'est valable que quand n est d'au moins 2 car si n = 1, avec au moins 1 hydroxyle converti, cela signifie une conversion totale par rapport aux hydroxyles formés. En fonction du nombre total d'hydroxyles résiduels libres laissés dans l'oligomère final, cet oligomère aura un indice OH adapté pour une réaction de greffage (si fonctionnalité en acrylate ou méthacrylate est égale à 1) ou de réticulation par voie de polycondensation ou de polyaddition, par exemple en présence d'agents réticulants convenables, tels que dianhydride ou mélamine ou polyisocyanate ou silane, cette réticulation étant duale et superposée à celle par voie radicalaire, par exemple par rayonnement tel qu'UV ou par péroxydes ou par les deux superposées (voie hybride) pour les acrylates ou méthacrylates portés par ledit oligomère selon la présente invention.

Selon un cas préféré d'oligomère selon l'invention, ledit oligomère porte en plus des groupements acrylates et/ou méthacrylates des groupements hydroxyles libres, de préférence au moins 2 par oligomère.

Selon d'autres options particulières de choix de l'amine R₁(-NH₂)ₙ (II), celle-ci peut être un oligomère ayant une masse moyenne en nombre Mn inférieure à 1500, de préférence inférieure à 750, de structure linéaire ou ramifiée ou hyperbranchée ou de structure dendrimère, cette dernière étant particulièrement intéressante pour sa forte fonctionnalité par unité de poids et par la répartition régulière des groupements acrylates ou méthacrylates terminaux.

Selon cette option, ladite amine R₁(-NH₂)ₙ (II) peut être en particulier un oligomère à base de polyalkylène imine, avec ledit alkylène étant de préférence l'éthylène, propylène ou butylène (tetraméthylène) plus préférentiellement l'éthylène ou un polyéther amine ou un polyamide-amine ou un polyesteramide amine ou un prépolymère d'addition amine-époxyde ou une amine ayant comme radical R₁ une chaîne grasse correspondant à, ou à base de, dimère (C₃₆) ou de trimère (C₅₄) d'acide gras.

Plus particulièrement, l'oligomère uréthane tel que comprenant ou consistant en un oligomère représenté par la formule (I) décrite ci-haut peut être le produit des réactions successives suivantes :
i) réaction carbonate-amine, entre un carbonate cyclique (III) incluant dans son cycle le radical -CH(R₂)-(CH₂)r-CH(R₂)- et une amine R₁(-NH₂)ₙ, (II) avec formation de n groupements uréthanes portés par le radical R₁, chaque groupement uréthane ayant en position β, un hydroxyle,
ii) estérification d'au moins un des groupements hydroxyles générés en position β de ladite liaison, de préférence de tous lesdits hydroxyles, par un composé anhydride cyclique (IV) incluant dans son cycle un radical organique bivalent R₃, avec formation à la place dudit hydroxyle d'un groupement ester-acide,
iii) réaction des groupements acides dudit groupement ester-acide avec un composé époxydé (V) porteur de m groupements époxydes précurseurs du radical R₄ et portés par un radical organique R₅ de valence m, avec m étant d'au moins 2 et avec formation à la place de chaque groupement acide dudit ester-acide, d'un ester portant m' = m-1 groupements époxydes, ladite réaction iii) étant suivie par
iv) réaction avec l'acide acrylique et/ou méthacrylique desdits m-1 groupements époxydes dudit groupement ester-époxyde
ou en option, dans ladite réaction iii) ledit composé époxydé (V) est remplacé par le composé acrylé et/ou méthacrylé (VI) ayant m-1 groupements époxydes acrylés et/ou méthacrylés (mélange si m' = m-1 > 1) avant ladite réaction iii) ou simultanément avec ladite réaction iii) et dans ce dernier cas par réaction simultanée entre ledit composé époxydé (V) et l'acide acrylique et/ou méthacrylique dans un rapport molaire de m' = m-1 moles d'acide acrylique et/ou méthacrylique par mole dudit composé époxydé (V), auquel cas (réaction simultanée) ladite réaction postérieure selon iv) n'a pas lieu,
avec R₁, R₂, R'₂, R₃, R₄, R₅, n, r et m étant tels que définis selon la formule (I) décrite ci-haut.

Le deuxième objet de l'invention est un procédé de préparation de l'oligomère tel que défini ci-haut selon l'invention, lequel procédé comprend au moins les étapes suivantes :
i) réaction carbonate-amine, entre un monocarbonate (carbonate) cyclique (III) et une monoamine ou polyamine (II) de fonctionnalité n en amine primaire, avec formation de n groupements uréthanes et par groupement uréthane d'un hydroxyle en position β de ladite liaison (c'est-à-dire n hydroxyles générés autant que de liaisons uréthanes ainsi créées),
ii) estérification d'au moins un parmi lesdits (n) groupements hydroxyles générés en position β de ladite liaison uréthane, de préférence de tous lesdits hydroxyles, par un composé anhydride cyclique (IV), avec formation à la place dudit hydroxyle en position β, d'un groupement ester-acide,
iii) réaction du groupement acide dudit groupement ester-acide avec un groupement époxyde d'un composé polyépoxydé (V) porteur de m groupements époxydes, avec m égal à au moins 2, avec chaque nouvel ester formé portant m' = m-1 groupements époxydes,
iv) réaction, avec l'acide acrylique et/ou méthacrylique, desdits m' = m-1 groupements époxydes pour former m' groupement acrylates et/ou méthacrylates
avec en option alternative pour ladite étape iii)
iiia) ledit composé polyépoxydé (époxydé) (V) est remplacé par son équivalent acrylé et/ou méthacrylé (VI) ayant m' = m-1 groupements époxydes déjà préacrylés et/ou préméthacrylés (mélange acrylate/méthacrylate si avant ladite réaction iii) ou
iiib) ledit composé acrylé ou méthacrylé (VI) est formé simultanément avec ladite réaction iii) et dans ce cas, par réaction simultanée à celle de l'étape iii), entre, ledit composé époxydé (V) et l'acide acrylique ou méthacrylique et dans un rapport molaire de m-1 moles d'acide acrylique ou méthacrylique par mole dudit composé époxydé (V),
auquel cas, selon options iiia) ou iiib), ladite étape iv) n'a pas lieu d'exister.

Selon une variante dudit procédé de préparation, ledit oligomère a une fonctionnalité supplémentaire à celle définie par p ci-haut, par le fait qu'au moins un des respectivement n1 ou n2 hydroxyles tels que définis ci-haut, portés par ladite amine R₁(NH₂)ₙ sont également convertis en acrylates et/ou méthacrylates selon les réactions des étapes i), ii), iii) ou iv) telles que définies dans ledit procédé ci-dessus.

La réaction de l'étape i) peut être réalisée dans une plage de température allant de 20 à 100°C, de préférence de 20 à 60°C.

La réaction de l'étape ii) peut être réalisée dans une plage allant de 60 à 120°C avec ou sans catalyseur. Comme exemple de catalyseur pouvant être utilisé, on peut citer l'acétate de sodium ou les amines tertiaires.

Les réactions de l'étape iii), iiia) et iiib) peuvent être réalisées dans une plage de température allant de 50 à 100°C, de préférence de 60 à 100°C en présence de catalyseurs tels que amines tertiaires et quaternaires ou sels d'ammonium quaternaire correspondants ou des sels organiques de chrome (III) ou des phosphines.

Un autre objet couvert par la présente invention concerne une composition polymérisable, en particulier réticulable, laquelle comprend au moins un oligomère tel que défini ci-dessus selon l'invention ou obtenu par un procédé tel que défini également selon l'invention. Ladite composition réticulable est en particulier choisie parmi : une composition de revêtements, plus particulièrement de peinture, vernis, encre, adhésif et de revêtement de gel (« gel coat ») ou une composition pour objets en 3D (tridimensionnels) par couches successives ou une composition réticulable de moulage ou une composition de composite ou une composition d'agent d'étanchéité ou une composition de scellement chimique. Une composition est réticulable si la fonctionnalité moyenne en nombre des groupements réactifs par composant réactif est d'au moins 2 pour des insaturations éthyléniques réagissant par voie radicalaire ou supérieure à 2 pour des réactions de condensation ou de polyaddition. C'est déjà le cas pour des compositions comprenant un oligomère selon l'invention ayant une fonctionnalité d'au moins 2 en acrylates ou méthacrylates. La réticulation peut être également le fait d'un agent réticulant porteur d'au moins deux insaturations copolymérisables avec ledit oligomère ou porteurs de plus de deux fonctions pouvant se condenser ou s'additionner avec celles dudit oligomère selon l'invention. Donc, le caractère réticulable de ladite composition peut être lié à la fonctionnalité dudit oligomère et/ou à celle d'un agent réticulant présent dans ladite composition et couvre donc les deux possibilités. Les objets en 3D sont obtenus par dépôt et réticulation suivant une forme en 3D en couches successives jusqu'à obtention de l'objet final réticulé en 3D.

Comme option alternative à l'option réticulable, ladite composition peut être une composition polymérisable pour la préparation d'un polymère greffé, de préférence comprenant en plus dudit oligomère tel que défini selon l'invention, au moins un comonomère copolymérisable par voie radicalaire, de préférence par voie de rayonnement en particulier UV et par voie péroxyde ou par voie duale pouvant faire appel à une réaction de réticulation par condensation, en particulier avec un agent réticulant convenable et une réaction radicalaire superposée (à ladite condensation).

Un autre objet couvert par l'invention concerne l'utilisation d'un oligomère de l'invention comme décrit ci-haut, en tant que liant uréthane polymérisable, avec ladite utilisation étant exempte de toute utilisation d'isocyanate et plus particulièrement exempte de toute utilisation d'isocyanate et de catalyseur à base d'étain, de préférence depuis la préparation et jusqu'à l'application finale comprise dudit oligomère. Dans le cas où ledit oligomère a une fonctionnalité globale en acrylates et/ou méthacrylates d'au moins 2, il est surtout utilisé en tant que liant réticulable dans des compositions réticulables, en particulier dans des compositions de revêtements, comme la peinture, vernis, encre, adhésif et revêtement de gel (« gel coat ») ou dans des composition pour objets en 3D (tridimensionnels) par couches successives ou dans des compositions de moulage ou dans des compositions de composites en particulier à base de fibres ou dans des compositions d'agent d'étanchéité ou dans des compositions de scellement chimique.

Une utilisation encore plus particulière concerne un oligomère tel que défini ci-haut et ayant au moins 2 groupements acrylates et/ou méthacrylates et en plus au moins deux groupements hydroxyles libres par oligomère, ladite utilisation étant en tant que liant organique dans une composition réticulable par voie duale et/ou hybride en particulier par voie radicalaire tel que rayonnement et/ou péroxyde et pouvant être superposée à une réticulation par voie de condensation, impliquant ladite fonction avec un agent reticulant adapté, lequel peut être un dianhydride, un polyisocyanate ou la mélamine ou un silane.

Une autre utilisation concernant cette fois un oligomère de l'invention qui est monofonctionnel en acrylates et/ou méthacrylates est une utilisation comme macromonomère dans la préparation de polymères greffés, en particulier en présence d'un comonomère copolymérisable.

Finalement, l'invention couvre aussi un produit ou un article fini, lequel est obtenu en utilisant au moins un oligomère tel que défini ci-haut selon l'invention, en particulier choisi parmi : revêtement, objet en 3D obtenu par couches successives, pièce moulée, matériau composite, joint d'étanchéité ou scellement chimique.

### Partie expérimentale

### 1) Préparation d'oligomères selon l'invention

### Exemple 1

Dans un réacteur de 1 L, on introduit 341,02 g de Priamine^{®} 1075 (Croda, masse équivalente M_{f} de 275 g par fonction amine, est une diamine grasse en C₃₆ à partir de dimère d'acide gras) et 0,06 g de triphénylphosphite. Sous agitation et à température ambiante, 122,69 g de propylène carbonate (Hunstman, Mw 102 g/mol) sont ajoutés sur une heure à débit constant. Une exothermie d'environ 15°C est observée. A la fin de l'ajout, la température du mélange est portée à 60°C. Après 1 heure de réaction à 60°C, 13,41 g d'acide acrylique, 1,23 g de 2,4,6 triméthyl p-crésol, 1,23 g d'EMHQ (éther méthylique d'hydroquinone) et 124,13 g d'anhydride succinique sont ajoutés au mélange. La température du milieu est augmentée à 90°C. L'avancement de la réaction est suivi par la mesure de l'indice d'acide total. Lorsque l'indice d'acide total_est inférieur à 181 mg KOH/g, 316 g de butane diol diglycidyl éther (d'EMS - M_{f} = 127,5 g/mole de fonctions époxydes), 67,0 g d'acide acrylique et 2,1 g de chlorure de tétraéthylammonium sont ajoutés au mélange et la température portée à 120°C. L'avancement de la réaction est suivi par la mesure des indices d'acide et d'époxy. On procède à des ajouts d'acide acrylique et/ou triméthylolpropane triglycidyl éther afin de garder un écart de 3 points entre l'indice d'acide et l'indice d'époxy IE (IA + 3 = IE). La réaction est arrêtée lorsque l'indice d'acide IA est inférieur à 2 mg KOH/g et l'indice d'époxy IE est inférieur à 5 mg KOH/g.

| Matières Premières | Parts poids |
|---|---|
| Chlorure de Tétraéthyl ammonium | 4,0 |
| Carbonate de propylène | 122,69 |
| Acide acrylique | 89,41 |
| Priamine 1075 | 341,02 |
| Triphénylphosphite | 0,06 |
| Butanediol Diglycidyl éther | 316,22 |
| 2,4,6 triméthyl p-crésol | 1,23 |
| EMHQ | 1,23 |
| Anhydride succinique | 124,13 |

### Exemple 2

Dans un réacteur de 1 L, on introduit 256,20 g de Priamine^{®} 1075 (Croda - M_{f} = 275 g/mole de fonction amine) et 0,05 g de triphénylphosphite. Sous agitation et à température ambiante, 92,18 g de propylène carbonate (Hunstman, Mw 102 g/mol) sont ajoutés sur une heure à débit constant. Une exothermie d'environ 15°C est observée. A la fin de l'ajout, la température du mélange est portée à 60°C. Après 1 heure de réaction à 60°C, 20,15 g d'acide acrylique, 0,92 g de 2,4,6 triméthyl p-crésol, 0,93 g d'EMHQ et 93,26 g d'anhydride succinique sont ajoutés au mélange. La température du milieu est augmentée à 90°C. L'avancement de la réaction est suivi par la mesure de l'indice d'acide total. Lorsque l'indice d'acide total est inférieur à 152 mg KOH/g, 169,75 g de triméthylolpropane triglycidyl éther (EMS - M_{f} = 149,6 g/mole de fonction époxyde), 100,76 g d'acide acrylique et 2,1 g de chlorure de tétraéthylammonium sont ajoutés au mélange et la température portée à 120°C. L'avancement de la réaction est suivi par la mesure des indices d'acide et d'époxy. On procède à des ajouts d'acide acrylique et/ou de triméthylolpropane triglycidyl éther afin de garder un écart de 3 points entre l'indice d'acide et l'indice d'époxy (IA + 3 = IE). La réaction est arrêtée lorsque l'indice d'acide est inférieur à 2 mg KOH/g et l'indice d'époxy est inférieur à 5 mg KOH/g.

| Matières Premières | Parts en poids |
|---|---|
| Chlorure de Tétraéthyl ammonium | 4,0 |
| Carbonate de propylène | 92,18 |
| Acide acrylique | 134,34 |
| Priamine 1075 | 256,20 |
| Triphénylphosphite | 0,05 |
| Triméthylolpropane Triglycidyl éther | 418,13 |
| 2,4,6 triméthyl p-crésol | 0,92 |
| EMHQ | 0,93 |
| Anhydride succinique | 93,26 |

### 2) Caractéristiques des produits préparés

| Caractéristiques | Unité | Exemple 1 | Exemple 2 |
|---|---|---|---|
| Fonctionnalité p (calculée) | | 2 | 4 |
| Viscosité Noury | Pa.s | 6,7 (50°C) | 16 (60°C) |
| Vitesse de réticulation sous lampe UV | m/min | < 1 | 25 |
| Dureté Persoz | nombre d'oscillations | 37 | 44 |
| Dureté Crayon selon ASTM D3363 | - | 6B | 4B |
| Flexibilité | mm | 3 | 3 |
| Résistance à l'acétone | s | 6 | 57 |

Les propriétés applicatives sont mesurées sur un film réticulé sous lampe UV « fusion » 120 W/cm à partir d'un mélange uréthane acrylate selon l'invention / photoinitiateur Darocur 1173 dans les proportions 96/4 w/w.

### Méthodes utilisées

Détermination de la réactivité (vitesse de réticulation) : Le mélange est appliqué en film de 12 µm sur une carte contraste (« Penoparc charts form 1B »^{®} Leneta), puis est réticulé à l'aide d'une lampe Fusion Hg 120 W/cm. On mesure la vitesse de passage minimum nécessaire (en m / min) pour obtenir un film sec au toucher.

Pour les tests suivants de dureté, flexibilité et de résistance à l'acétone, les films photoréticulés sont laissés en salle climatisée (T = 23°C) pendant 24 heures après réticulation et avant les mesures.

Détermination de la dureté Persoz : Le mélange à examiner est appliqué en film de 100 µm sur une plaque en verre et réticulé par une lampe Fusion Hg 120 W/cm à une vitesse de 8 m / min.
On mesure le nombre d'oscillations avant l'amortissement des oscillations (passage de 12° à 4° d'amplitude), d'un pendule au contact de la plaque de verre revêtue d'après la norme ISO 1522.

Détermination de la flexibilité : Le mélange est appliqué en film de 100 µm sur une plaque en acier lisse de 25/10 mm d'épaisseur (D-46^{®} Q-Panel), puis réticulé par une lampe Fusion Hg 120 W/cm à une vitesse de 8 m / min.
On courbe la plaque revêtue sur des mandrins cylindriques d'après la norme ISO 1519. On exprime le résultat par la valeur (en mm) du rayon de courbure le plus faible qu'on peut infliger au revêtement sans qu'il ne se fissure ni se décolle du support.

Détermination de la résistance à l'acétone : Le mélange est appliqué en film de 12 µm sur une plaque en verre, puis réticulé par une lampe Fusion Hg 120 W/cm à une vitesse de 8 m / min. On frotte le revêtement avec un chiffon imbibé d'acétone. Le résultat est le temps (exprimé en secondes) au-delà duquel le film se décolle et/ou se désagrège.

## Revendications

1. Oligomère uréthane, qui peut être linéaire ou ramifié, porteur d'au moins p groupements terminaux acrylates ou méthacrylates, **caractérisé en ce que** ladite liaison uréthane est obtenue sans utilisation d'isocyanate, par la réaction carbonate-amine entre n moles de monocarbonate (carbonate) cyclique (III) et une mole d'une amine (II) de fonctionnalité n en amine primaire qui est une monoamine ou polyamine, avec ensuite, la conversion d'au moins un des n hydroxyles formés en position β de chacune des n liaisons uréthanes, de préférence de tous lesdits n hydroxyles, en ester-acides par réaction équimolaire avec un composé anhydride cyclique (IV), réaction suivie par la conversion (totale) desdites fonctions acides, en p groupements terminaux acrylés ou méthacrylés par réaction avec un composé polyépoxydé (V) porteur de m fonctions époxydes, avec m égal au moins à 2, dont m' = m-1 groupements époxydes étant convertis en esters acrylates et/ou méthacrylates et avec la fonctionnalité finale p étant d'au moins égale à m' et de préférence avec p étant égale à m'*n pour une conversion totale desdits hydroxyles.

2. Oligomère selon la revendication 1, **caractérisé en ce que** ladite conversion desdits hydroxyles est totale et ladite fonctionnalité globale p est égale à m'*n (si conversion partielle x, dans ce cas p = m'*x*n).

3. Oligomère selon la revendication 2, **caractérisé en ce qu'**il comprend ou consiste en, le produit de formule générale suivante (I) :
R₁[-NH-(C=O)-O-CH(R₂)-(CH₂)ᵣ-CH(R'₂)-O-(O=C)-R₃-(C=O)-O-R₄-R₅(-R₄-R₆)_{m'}]ₙ (l)
avec :
- R₁: hydrocarbyle de valence n dans ledit composé aminé (II), porteur de n groupements amines -NH₂,
- R₂ ou R'₂ : substituants identiques ou différents et interchangeables dans leur position, pouvant être choisis parmi : H, alkyle, hydroxyalkyle, ledit alkyle étant en C₁ à C₃, avec R₂ et R'₂ pouvant se situer sur deux carbones voisins si r = 0 ou sur deux carbones séparés par un méthylène si r = 1, avec l'ensemble du radical - CH(R₂)-(CH₂)ᵣ-CH(R'₂)- pouvant également représenter un radical cycloalkylène en C₅ ou C₆ et faisant au départ (avant réaction) partie du cycle dudit composé carbonate cyclique (III),
- R₃ : radical alkylène, en particulier en C₂, cycloalkylène ou arylène pouvant être substitués, en particulier par un alkyle parmi méthyle ou éthyle ou par un halogène, comme le chlore ou par un alcoxy ou non substitués, R₃ faisant au départ (avant réaction) partie d'un cycle anhydride d'un composé anhydride cyclique (IV),
- R₄-R₅(-R₄- )_{m'} étant le résidu hydrocarbyle de valence globale m (m' = m-1), correspondant audit composé époxydé (V) après réaction des m groupements époxydes, avec R₄ représentant le radical -CH₂-CH(OH)- dont le précurseur est un groupement époxy (oxirane) et R₅ étant le radical hydrocarbyle de valence m dans ledit composé époxydé (V), porteur au départ de m groupements époxyde (oxirane) précurseur dudit radical R₄, ledit composé (V) pouvant être entre autres une chaîne hydrocarbonée époxydée sur les carbones formant ladite chaîne,
- R₆: CH₂=C(R₇)-(C=O)-O- étant acrylate quand R₇: -H ou méthacrylate quand R₇ :-CH₃ ou un mélange de deux groupements, acrylate et méthacrylate, pour p > 1,
ledit oligomère étant monofonctionnel, c'est-à-dire ayant m'*n égal à 1 ou multifonctionnel, c'est-à-dire ayant p = m'*n égal à 2 ou supérieur à 2.

4. Oligomère selon l'une des revendications 1 à 3, **caractérisé en ce que** ledit oligomère est monofonctionnel avec p = m'*n = 1, m' = 1 et n = 1.

5. Oligomère selon l'une des revendications 1 à 3, **caractérisé en ce que** ledit oligomère est multifonctionnel et de fonctionnalité p = m'*n = 2 ou supérieur à 2 avec m' ≥ 1 et n ≥ 2.

6. Oligomère selon l'une des revendications 1 à 3, **caractérisé en ce que** ledit oligomère est multifonctionnel et de fonctionnalité p = m'*n = 2 ou supérieure à 2 avec m' ≥ 2 et n ≥ 1.

7. Oligomère selon la revendication 5 ou 6, **caractérisé en ce que** ledit oligomère est multifonctionnel et de fonctionnalité p = m'*n allant de 2 à 32 et de préférence de 2 à 16, plus préférentiellement de 2 à 8 et en particulier de 2 à 6.

8. Oligomère selon l'une des revendications 1 à 7, **caractérisé en ce que** ledit composé anhydride cyclique (IV) est sélectionné parmi les monoanhydrides cycliques suivants :
anhydride succinique (R₃ : éthylène), maléique (R₃ : vinylène), phtalique (R₃ : 1,2 phénylène), itaconique, chlorendique, nadique, tetrahydrophtalique, hexahydrophtalique, méthyl hexahydrophtalique, méthyl tetrahydrophtalique, anhydride dicarboxylique naphténique, glutarique, trimellitique, adipique, sébacique, dodécyl succinique et de préférence succinique, maléique, itaconique, phtalique, tetrahydrophtalique, hexahydrophtalique, méthyl hexahydrophtalique, méthyl tetrahydrophtalique.

9. Oligomère selon l'une des revendications 1 à 8, **caractérisé en ce que** ledit carbonate cyclique (III) est choisi parmi les carbonates d'éthylène glycol (R₂ = R'₂ : -H et r = 0), de 1,2-propylène diol (R₂ = -H, R'₂ : -CH₃, r = 0), de 1,3-propylène diol (R₂ = R'₂ : -H, r = 1), de glycérol (R₂ : H, R'₂ : -CH₂-OH, r = 0), de 1,2-butane diol (R₂ : -H et R'₂ : -CH₂CH₃), de 2,3-butane diol (R₂ et R'₂ : -CH₃) et 1,3-butane diol (R₂ ou R'₂ = -CH₃ et r = 1) ou le carbonate correspondant à un glycidyl éther d'alcool en C₁-C₄ ou de phénol, par addition de CO₂ sur l'époxyde correspondant et préférentiellement d'éthylène glycol, de 1,2-propylène diol, de glycérol, de 1,2-butane diol.

10. Oligomère selon l'une des revendications 1 à 9, **caractérisé en ce que** ledit composé époxydé (V) est un monomère diépoxyde parmi : diglycidyl éther d'éthylène glycol, diglycidyl éther de propylène glycol, diglycidyl éther de butanediol, diglycidyl éther de néopentyl glycol, diglycidyl éther d'hexanediol, diglycidyl éther de cyclohéxane diméthanol, diglycidyl éther de bisphénol A (DGEBA) hydrogéné ou non hydrogéné, diglycidyl éther de bisphénol F (DGEBF) hydrogéné ou non hydrogéné, ces composés étant éventuellement alcoxylés ou diglycidyl ester d'acide térephtalique, diglycidyl ester d'acide tetrahydrophtalique ou diglycidyl ester d'acide hexahydrophtalique.

11. Oligomère selon l'une des revendications 1 à 9, **caractérisé en ce que** ledit composé époxydé (V) est un triépoxyde sélectionné parmi : triglycidyl éther de triméthylol propane, triglycidyl éther de glycérol, triglycidyl éther d'isocyanurate ou un tetraépoxyde sélectionné parmi : tetraglycidyl éther de pentaérythritol ou le tetraglycidyl éther de ditriméthylol propane ou un hexa fonctionnel comme l'hexaglycidyl éther de dipentaérythritol, tous ces composés étant éventuellement alcoxylés

12. Oligomère selon l'une des revendications 1 à 9, **caractérisé en ce que** ledit composé époxydé (V) est une résine époxydée de masse moyenne en nombre Mn < 1000, de préférence < 600, choisie parmi : résines formophénoliques linéaires ou ramifiées (novolaques) époxydées, huiles époxydées, en particulier huile de soja époxydée, polybutadiène époxydé, prépolymère de condensation ou d'addition époxydé, en particulier précondensat amine-époxy avec terminaisons époxydes.

13. Oligomère selon l'une des revendications 1 à 12, **caractérisé en ce que** ladite amine R₁(NH₂)ₙ (II) est de structure monomère ou oligomère, de préférence une amine aliphatique en C₂ à C₅₄, en particulier de C₂ à C₃₆ ou une amine aryl aliphatique ou une amine cycloaliphatique.

14. Oligomère selon l'une des revendications 1 à 12, **caractérisé en ce que** ladite amine R₁(NH₂)ₙ (II) est une mono-uréthane monoamine ou une diuréthane diamine, qui sont les produits de condensation d'une diamine primaire avec respectivement un monocarbonate cyclique qui peut être identique ou différent dudit composé carbonate cyclique (III) tel que défini selon la revendication 1 ou 9 ou un dicarbonate cyclique (porteur de deux groupements carbonates cycliques) et correspondent à un rapport en groupements amine primaire sur groupements carbonates cycliques de 2.

15. Oligomère selon la revendication 14, **caractérisé en ce que** n1 = n hydroxyles par composé amine (II) sont présents en position β de la liaison uréthane formée par réaction carbonate-amine dans ladite uréthane monoamine ou dans ladite diuréthane diamine et que ces n1 = n hydroxyles sont également convertis, pour au moins un groupement parmi eux et de préférence totalement, par réactions successives avec ledit anhydride cyclique (IV) tel que défini selon l'une des revendications 1, 3 ou 8, en groupements ester-acides suivie par la conversion desdites fonctions acides en au moins m' groupements terminaux acrylés ou méthacrylés supplémentaires, par réaction avec ledit composé polyépoxydé (V) tel que défini selon l'une des revendications 1, 3 ou 10 à 12, avec dans ce cas une fonctionnalité supplémentaire en groupements (fonctions) acrylates ou méthacrylates dudit oligomère, égale à au moins m' et de préférence pour conversion totale desdits n1 hydroxyles, avec une fonctionnalité supplémentaire égale à m'*n1 = m'*n.

16. Oligomère selon l'une des revendications 1 à 14, **caractérisé en ce que** ladite amine R₁(-NH₂)ₙ comporte dans ledit radical R₁ au moins n2 hydroxyles différents des hydroxyles formés en position β d'une liaison uréthane par réaction amine-carbonate et que lesdits hydroxyles n2 sont également convertis par réactions successives avec ledit anhydride cyclique (IV) tel que défini selon l'une des revendications 1, 2 ou 7, en autant de groupements ester-acides suivie par la conversion desdites fonctions acides en m'n2 groupements terminaux acrylés ou méthacrylés supplémentaires, par réaction avec ledit composé polyépoxydé (V) tel que défini selon l'une des revendications 1, 2 ou 9 à 11, avec dans ce cas la fonctionnalité globale en groupements (fonctions) acrylates ou méthacrylates étant ainsi augmentée de m'*n2.

17. Oligomère selon la revendication 15 ou 16, **caractérisé en ce que** au moins un desdits n1 hydroxyles tels que définis selon la revendication 15 ou n2 hydroxyles tels que définis selon la revendication 16 sont convertis auxdits acrylates ou méthacrylates avec la fonctionnalité supplémentaire respective étant d'au moins m'.

18. Oligomère selon la revendication 13, **caractérisé en ce que** ladite amine R₁(-NH₂)ₙ (II) est un oligomère ayant une masse moyenne en nombre Mn inférieure à 1500, de préférence inférieure à 750, de structure linéaire ou ramifiée ou hyperbranchée ou de structure dendrimère.

19. Oligomère selon la revendication 18, **caractérisé en ce que** ladite amine R₁(-NH₂)ₙ (II) est un oligomère à base de polyalkylène imine, avec ledit alkylène étant de préférence l'éthylène, propylène ou butylène (tetraméthylène) plus préférentiellement l'éthylène ou un polyéther amine ou un polyamide amine ou un polyesteramide amine ou un prépolymère d'addition amine-époxyde ou une amine ayant comme radical R₁ une chaîne grasse correspondant à, ou à base de, dimère ou de trimère d'acide gras.

20. Oligomère selon l'une des revendications 15 ou 16, **caractérisé en ce que** ledit oligomère porte en plus des groupements acrylates et/ou méthacrylates des groupements hydroxyles libres, de préférence au moins 2 par oligomère.

21. Oligomère uréthane selon l'une des revendications 3 à 20, **caractérisé en ce qu'**il est le produit des réactions successives suivantes :
i) réaction carbonate-amine, entre un carbonate cyclique (III) incluant dans son cycle le radical -CH(R₂)-(CH₂)r-CH(R₂)- et une amine R₁(-NH₂)ₙ, (II) avec formation de n groupements uréthanes portés par le radical R₁, chaque groupement uréthane ayant en position β, un hydroxyle,
ii) estérification d'au moins un des groupements hydroxyles générés en position β de ladite liaison, de préférence de tous lesdits hydroxyles, par un composé anhydride cyclique (IV) incluant dans son cycle un radical organique bivalent R₃, avec formation à la place dudit hydroxyle d'un groupement ester-acide,
iii) réaction des groupements acides dudit groupement ester-acide avec un composé époxydé (V) porteur de m groupements époxydes précurseurs du radical R₄ et portés par un radical organique R₅ de valence m, avec m étant d'au moins 2 et avec formation à la place de chaque groupement acide dudit ester-acide, d'un ester portant m' = m-1 groupements époxydes, ladite réaction iii) étant suivie par
iv) réaction avec l'acide acrylique et/ou méthacrylique desdits m-1 groupements époxydes dudit groupement ester-époxyde
ou en option, dans ladite réaction iii) ledit composé époxydé (V) est remplacé par le composé acrylé et/ou méthacrylé (VI) ayant m-1 groupements époxydes acrylés et/ou méthacrylés (mélange si m' = m-1 > 1) avant ladite réaction iii) ou simultanément avec ladite réaction iii) et dans ce dernier cas par réaction simultanée entre ledit composé époxydé (V) et l'acide acrylique et/ou méthacrylique dans un rapport molaire de m' = m-1 moles d'acide acrylique et/ou méthacrylique par mole dudit composé époxydé (V), auquel cas (réaction simultanée), ladite réaction postérieure selon iv) n'a pas lieu,
avec, R₁, R₂, R'₂, R₃, R₄, R₅, n, r et m étant tels que définis selon la revendication 3.

22. Procédé de préparation d'un oligomère tel que défini selon l'une des revendications 1 à 21, **caractérisé en ce qu'**il comprend au moins les étapes suivantes :
i) réaction carbonate-amine, entre un monocarbonate (carbonate) cyclique (III) et une monoamine ou polyamine (II) de fonctionnalité n en amine primaire, avec formation de n groupements uréthanes et par groupement uréthane d'un hydroxyle en position β de ladite liaison,
ii) estérification d'au moins un desdits groupements hydroxyles générés en position β de ladite liaison uréthane, de préférence de tous lesdits hydroxyles, par un composé anhydride cyclique (IV), avec formation à la place dudit hydroxyle en position β, d'un groupement ester-acide,
iii) réaction du groupement acide dudit groupement ester-acide avec un groupement époxyde d'un composé polyépoxydé (V) porteur de m groupements époxydes, avec m égal à au moins 2, avec chaque nouvel ester formé portant m' = m-1 groupements époxydes,
iv) réaction, avec l'acide acrylique et/ou méthacrylique desdits m' = m-1 groupements époxydes pour former m' groupement acrylates et/ou méthacrylates
avec en option alternative pour ladite étape iii)
iiia) ledit composé polyépoxydé (époxydé) (V) est remplacé par son équivalent acrylé et/ou méthacrylé (VI) ayant m' = m-1 groupements époxydes déjà préacrylés et/ou préméthacrylés (mélange acrylate/méthacrylate si avant ladite réaction iii)
ou
iiib) ledit composé acrylé ou méthacrylé (VI) est formé simultanément avec ladite réaction iii) et dans ce cas, par réaction simultanée à celle de l'étape iii), entre, ledit composé époxydé (V) et l'acide acrylique ou méthacrylique et dans un rapport molaire de m-1 moles d'acide acrylique ou méthacrylique par mole dudit composé époxydé (V),
auquel cas, selon options iiia) ou iiib), ladite étape iv) n'a pas lieu d'exister.

23. Procédé de préparation selon la revendication 22, **caractérisé en ce que** ledit oligomère est défini selon l'une des revendications 15 ou 16 et que au moins un des respectivement n1 ou n2 hydroxyles portés par ladite amine R₁(NH₂)ₙ sont également convertis en acrylates et/ou méthacrylates selon les réactions des étapes i), ii), iii) ou iv) telles que définies selon la revendication 21.

24. Composition polymérisable en particulier réticulable, **caractérisée en ce qu'**elle comprend au moins un oligomère tel que défini selon l'une des revendications 1 à 21 ou obtenu par un procédé tel que défini selon la revendication 22 ou 23.

25. Composition selon la revendication 24, **caractérisée en ce qu'**il s'agit d'une composition réticulable, en particulier choisie parmi : une composition de revêtements, plus particulièrement de peinture, vernis, encre, adhésif et de revêtement de gel (« gel coat ») ou une composition pour objets en 3D (tridimensionnels) par couches successives ou une composition de moulage ou une composition de composite ou une composition d'agent d'étanchéité ou une composition de scellement chimique.

26. Composition selon la revendication 24, **caractérisée en ce qu'**elle est une composition polymérisable pour la préparation d'un polymère greffé, de préférence comprenant en plus dudit oligomère selon l'une des revendications 1 à 21 au moins un comonomère copolymérisable par voie radicalaire, de préférence par voie de rayonnement en particulier UV et par voie péroxyde ou par voie duale pouvant faire appel à une réaction de réticulation par condensation et une réaction radicalaire superposées.

27. Utilisation d'un oligomère tel que défini selon l'une des revendications 1 à 21, en tant que liant uréthane polymérisable, **caractérisée en ce qu'**elle est exempte de toute utilisation d'isocyanate et plus particulièrement exempte de toute utilisation d'isocyanate et de catalyseur à base d'étain, de préférence depuis la préparation et jusqu'à l'application finale comprise dudit oligomère.

28. Utilisation selon la revendication 27, **caractérisée en ce que** ledit oligomère a une fonctionnalité globale en acrylates et/ou méthacrylates d'au moins 2 et qu'il est utilisé en tant que liant réticulable dans des compositions réticulables, en particulier choisies parmi des compositions de revêtements comme la peinture, vernis, encre, adhésif et revêtement de gel (« gel coat ») ou dans des composition pour objets en 3D (tridimensionnels) par couches successives ou dans des compositions de moulage ou dans des compositions de composites ou dans des compositions d'agent d'étanchéité ou dans des compositions de scellement chimique.

29. Utilisation d'au moins un oligomère tel que défini selon la revendication 21, comme liant organique dans une composition réticulable par voie duale et/ou hybride en particulier par voie radicalaire tel que rayonnement et/ou péroxyde et par voie de condensation avec un dianhydride ou polyisocyanate ou mélamine ou silane.

30. Utilisation selon la revendication 27, **caractérisée en ce que** ledit oligomère est monofonctionnel comme défini selon la revendication 4 et qu'il est utilisé comme macromonomère dans la préparation de polymères greffés.

31. Produit ou article fini **caractérisé en ce qu'**il est obtenu en utilisant au moins un oligomère tel que défini selon l'une des revendications 1 à 21, en particulier choisi parmi :
revêtement, objet en 3D obtenu par couches successives, pièce moulée, matériau composite, joint d'étanchéité ou scellement chimique.

## Patentansprüche

1. Urethanoligomer, das linear oder verzweigt sein kann, umfassend wenigstens p Acrylat- oder Methacrylat-Endgruppen, **dadurch gekennzeichnet, dass** die Urethanbindung ohne Verwendung von Isocyanat erhalten wird durch die Carbonat-Amin-Reaktion zwischen n mol cyclischem Monocarbonat (Carbonat) (III) und einem Mol eines Amins (II) mit der primären Amin-Funktionalität n, das ein Monoamin oder Polyamin ist, mit anschließender Umwandlung von wenigstens einem der n Hydroxylgruppen, gebildet an Position β jeder der n Urethanbindungen, vorzugsweise aller der n Hydroxylgruppen, in Estersäuren durch äquimolare Reaktion mit einer cyclischen Anhydridverbindung (IV), wobei sich an die Reaktion die (vollständige) Umwandlung der Säurefunktionen in p Acrylat- oder Methacrylat- Endgruppen anschließt, und zwar durch Reaktion mit einer Polyepoxidverbindung (V), die m Epoxidfunktionen umfasst, wobei m gleich mindestens 2 ist, wovon m' = m-1 Epoxidgruppen in Acrylat- und/oder Methacrylatester umgewandelt werden, und wobei die Endfunktionalität p gleich mindestens m' ist und wobei vorzugsweise für eine vollständige Umwandlung der Hydroxylgruppen p gleich m'*n ist.

2. Oligomer gemäß Anspruch 1, **dadurch gekennzeichnet, dass** die Umwandlung der Hydroxylgruppen vollständig ist und die Gesamtfunktionalität p gleich m'*n ist (bei partieller Umwandlung x, in diesem Fall p = m'*x*n).

3. Oligomer gemäß Anspruch 2, **dadurch gekennzeichnet, dass** es das Produkt der folgenden allgemeinen Formel (I) umfasst oder daraus besteht:
R₁[-NH-(C=O)-O-CH(R₂)-(CH₂)ᵣ-CH(R'₂)-O-(O=C)-R₃-(C=O)-O-R₄-R₅(-R₄-R₆)_{m'}]ₙ n (I)
wobei:
- R₁ : Hydrocarbyl der Wertigkeit n in der Aminverbindung (II), umfassend n Amingruppen -NH₂,
- R₂ oder R'₂ : identische oder verschiedene und in ihrer Position austauschbare Substituenten, die gewählt sein können aus: H, Alkyl, Hydroxyalkyl, wobei, wenn das Alkyl C₁ bis C₃ ist, R₂ und R'₂ auf zwei benachbarten Kohlenstoffatomen, falls r = 0, oder auf zwei durch ein Methylen getrennten Kohlenstoffatomen, falls r = 1, lokalisiert sein können, wobei die Gesamtheit des Restes -CH(R₂)-(CH₂)ᵣ-CH(R'₂)- auch einen C₅- oder C₆-Cycloalkylenrest repräsentieren kann, und die anfangs (vor der Reaktion) ein Teil des Rings der cyclischen Carbonatverbindung (III) sind,
- R₃ : Alkylenrest, insbesondere C₂, Cycloalkylen oder Arylen, welche insbesondere durch ein Alkyl, wie Methyl oder Ethyl, oder durch ein Halogen, wie Chlor, oder durch ein Alkoxy substituiert oder unsubstituiert sein können, wobei R₃ anfangs (vor der Reaktion) ein Teil eines Anhydrid-Rings einer cyclischen Anhydridverbindung (IV) ist,
- R₄-R₅(-R₄-)_{m'} den Hydrocarbylrest der Gesamtwertigkeit m (m' = m-1) bildet, entsprechend der epoxidierten Verbindung (V) nach Reaktion der m Epoxidgruppen, wobei R₄ für den Rest -CH₂-CH(OH)-steht, dessen Vorläufer eine Epoxidgruppe (Oxiran) ist, und R₅ der Hydrocarbylrest der Wertigkeit m in der epoxidierten Verbindung (V) ist, anfangs umfassend m Epoxidvorläufergruppen (Oxiran) des Rests R₄, wobei die Verbindung (V) unter anderem eine an den die Kette bildenden Kohlenstoffatomen epoxidierte Kohlenwasserstoffkette sein kann,
- R₆ : CH₂=C (R₇) - (C=O) -O-, bei dem es sich um Acrylat handelt, wenn R₇ : -H, oder um Methacrylat handelt, wenn R₇ : -CH₃, oder ein Gemisch von zwei Gruppen, Acrylat und Methacrylat, handelt, wenn p > 1,
wobei das Oligomer monofunktionell, d.h. wenn m'*n gleich 1, oder multifunktionell ist, d.h. wenn p = m'*n gleich 2 oder größer als 2.

4. Oligomer gemäß einem der Ansprüche 1 bis 3, **dadurch gekennzeichnet, dass** das Oligomer monofunktionell ist, bei p = m'*n = 1, m' = 1 und n = 1.

5. Oligomer gemäß einem der Ansprüche 1 bis 3, **dadurch gekennzeichnet, dass** das Oligomer multifunktionell ist und eine Funktionalität p = m'*n = 2 oder höher als 2, bei m' ≥ 1 und n ≥ 2, aufweist.

6. Oligomer gemäß einem der Ansprüche 1 bis 3, **dadurch gekennzeichnet, dass** das Oligomer multifunktionell ist und eine Funktionalität p = m'*n = 2 oder höher als 2, bei m' ≥ 2 und n ≥ 1, aufweist.

7. Oligomer gemäß Anspruch 5 oder 6, **dadurch gekennzeichnet, dass** das Oligomer multifunktionell ist und eine Funktionalität p = m' *n im Bereich von 2 bis 32 und vorzugsweise 2 bis 16, weiter bevorzugt 2 bis 8 und insbesondere 2 bis 6 aufweist.

8. Oligomer gemäß einem der Ansprüche 1 bis 7, **dadurch gekennzeichnet, dass** die cyclische Anhydridverbindung (IV) ausgewählt ist aus den folgenden cyclischen Monoanhydriden: Bernsteinsäureanhydrid (R₃ : Ethylen), Maleinsäureanhydrid (R₃ : Vinylen), Phthalsäureanhydrid (R₃ : 1,2-Phenylen), Itaconsäureanhydrid, Chlorendicsäureanhydrid, Nadinsäureanhydrid, Tetrahydrophthalsäureanhydrid, Hexahydrophthalsäureanhydrid, Methylhexahydrophthalsäureanhydrid, Methyltetrahydrophthalsäureanhydrid, Naphthendicarbonsäureanhydrid, Glutarsäureanhydrid, Trimellitsäureanhydrid, Adipinsäureanhydrid, Sebacinsäureanhydrid, Dodecylbernsteinsäureanhydrid und vorzugsweise Bernsteinsäureanhydrid, Maleinsäureanhydrid, Itaconsäureanhydrid, Phthalsäureanhydrid, Tetrahydrophthalsäureanhydrid, Hexahydrophthalsäureanhydrid, Methylhexahydrophthalsäureanhydrid, Methyltetrahydrophthalsäureanhydrid.

9. Oligomer gemäß einem der Ansprüche 1 bis 8, **dadurch gekennzeichnet, dass** das cyclische Carbonat (III) ausgewählt ist aus Ethylenglycolcarbonat (R₂ = R'₂ : -H und r = 0), 1,2-Propylendiolcarbonat (R₂ = -H, R'₂ : -CH₃, r = 0), 1, 3-Propylendiolcarbonat (R₂ = R'2 : -H, r = 1), Glycerolcarbonat (R₂ : H, R'₂ : -CH₂-OH, r = 0), 1,2-Butandiolcarbonat (R₂ : -H und R'₂ : -CH₂CH₃), 2,3-Butandiolcarbonat (R₂ und R'₂ : -CH₃) und 1,3-Butandiolcarbonat (R₂ oder R'₂ = -CH₃ und r = 1) oder dem Carbonat, entsprechend einem Glycidylether von C₁-C₄-Alkohol oder Phenol, mittels Addition von CO₂ an das entsprechende Epoxid, und vorzugsweise Ethylenglycol-, 1,2-Propylendiol-, Glycerol-, 1,2-Butandiolcarbonat.

10. Oligomer gemäß einem der Ansprüche 1 bis 9, **dadurch gekennzeichnet, dass** die Epoxidverbindung (V) ein Diepoxidmonomer ist, aus: Ethylenglycoldiglycidylether, Propylenglycoldiglycidylether, Butandioldiglycidylether, Neopentylglycoldiglycidylether, Hexandioldiglycidylether, Cyclohexandimethanoldiglycidylether, hydriertem oder unhydriertem Bisphenol-A-diglycidylether (DGEBA), hydriertem oder unhydriertem Bisphenol-F-diglycidylether (DGEBF), wobei diese Verbindungen gegebenenfalls alkoxyliert sind, oder Terephthalsäurediglycidylester, Tetrahydrophthalsäurediglycidylester oder Hexahydrophthalsäurediglycidylester.

11. Oligomer gemäß einem der Ansprüche 1 bis 9, **dadurch gekennzeichnet, dass** die Epoxidverbindung (V) ein Triepoxid ist, ausgewählt aus:
Trimethylolpropantriglycidylether, Glyceroltriglycidylether, Isocyanurattriglycidylether, oder ein Tetraepoxid ist, ausgewählt aus: Pentaerythritoltetraglycidylether oder Ditrimethylolpropantetraglycidylether, oder eine hexafunktionelle Substanz ist, wie Dipentaerythritolhexaglycidylether, wobei alle diese Verbindungen gegebenenfalls alkoxyliert sind.

12. Oligomer gemäß einem der Ansprüche 1 bis 9, **dadurch gekennzeichnet, dass** die epoxidierte Verbindung (V) ein epoxidiertes Harz mit einer zahlenmittleren Masse Mn < 1000, vorzugsweise < 600, ist, das ausgewählt ist aus:
epoxidierten linearen oder verzweigten Phenol-Formaldehyd-Harzen (Novolaken), epoxidierten Ölen, insbesondere epoxidiertem Sojaöl, epoxidiertem Polybutadien, epoxidiertem Kondensations- oder Additions-Präpolymer, insbesondere Amin-Epoxy-Präkondensat mit Epoxid-Endgruppen.

13. Oligomer gemäß einem der Ansprüche 1 bis 12, **dadurch gekennzeichnet, dass** das Amin R₁(NH₂)ₙ (II) eine monomere oder oligomere Struktur aufweist und vorzugsweise ein C₂-bis C₅₄-, insbesondere C₂- bis C₃₆-aliphatisches Amin oder ein arylaliphatisches Amin oder ein cycloaliphatisches Amin ist.

14. Oligomer gemäß einem der Ansprüche 1 bis 12, **dadurch gekennzeichnet, dass** das Amin R₁(NH₂)ₙ (II) ein Monourethanmonoamin oder ein Diurethandiamin ist, bei welchen es sich um die jeweiligen Produkte der Kondensation eines primären Diamins mit einem cyclischen Monocarbonat, das gleich oder von der cyclischen Carbonatverbindung (III), wie gemäß Anspruch 1 oder 9 definiert, verschieden sein kann, oder einem cyclischen Dicarbonat (umfassend zwei cyclische Carbonatgruppen), und zwar entsprechend einem Verhältnis von primären Amingruppen zu cyclischen Carbonatgruppen von 2, handelt.

15. Oligomer gemäß Anspruch 14, **dadurch gekennzeichnet, dass** n1 = n Hydroxylgruppen je Aminverbindung (II) an Position β der durch Carbonat-Amin-Reaktion gebildeten Urethanbindung in dem Urethanmonoamin oder in dem Diurethandiamin vorhanden sind, und dass diese n1 = n Hydroxylgruppen ebenfalls, wenigstens für eine Gruppe von diesen und vorzugsweise vollständig, durch sukzessive Reaktionen mit dem cyclischen Anhydrid (IV), wie gemäß einem der Ansprüche 1, 3 oder 8 definiert, in Estersäuregruppen umgewandelt werden, gefolgt von der Umwandlung der Säurefunktionen in wenigstens m' zusätzliche Acrylat- oder Methacrylat-Endgruppen, durch Reaktion mit der Polyepoxidverbindung (V), wie gemäß einem der Ansprüche 1, 3 oder 10 bis 12 definiert, wobei in diesem Fall eine zusätzliche Funktionalität an Acrylat- oder Methacrylatgruppen (-funktionen) des Oligomers gleich wenigstens m' ist, und wobei für die vollständige Umwandlung der n1 Hydroxylgruppen vorzugsweise eine zusätzliche Funktionalität gleich m'*n1 = m'*n ist.

16. Oligomer gemäß einem der Ansprüche 1 bis 14, **dadurch gekennzeichnet, dass** das Amin R₁(-NH₂)ₙ im Rest R₁ wenigstens n2 Hydroxyle, verschieden von an der Position β einer Urethanbindung durch Amin-Carbonat-Reaktion gebildeten Hydroxylen, enthält, und dass die besagten n2 Hydroxylgruppen ebenfalls durch sukzessive Reaktionen mit dem cyclischen Anhydrid (IV), wie gemäß einem der Ansprüche 1, 2 oder 7 definiert, in ebenso viele Estersäuregruppen umgewandelt werden, gefolgt von der Umwandlung der Säurefunktionen in m'n2 zusätzliche Acrylat- oder Methacrylat-Endgruppen durch Reaktion mit der Polyepoxidverbindung (V), wie definiert gemäß einem der Ansprüche 1, 2 oder 9 bis 11, wobei sich in diesem Fall die Gesamtfunktionalität an Acrylat- oder Methacrylatgruppen (-funktionen) somit um m'*n2 erhöht.

17. Oligomer gemäß Anspruch 15 oder 16, **dadurch gekennzeichnet, dass** wenigstens eines der n1 Hydroxylgruppen, wie definiert gemäß Anspruch 15, oder n2 Hydroxylgruppen, wie definiert gemäß Anspruch 16, in die Acrylate oder Methacrylate umgewandelt wird, wobei die jeweilige zusätzliche Funktionalität wenigstens m' beträgt.

18. Oligomer gemäß Anspruch 13, **dadurch gekennzeichnet, dass** das Amin R₁(-NH₂)ₙ (II) ein Oligomer mit einer zahlenmittleren Masse Mn unter 1500, vorzugsweise unter 750, mit linearer oder verzweigter oder hyperverzweigter Struktur oder Dendrimerstruktur ist.

19. Oligomer gemäß Anspruch 18, **dadurch gekennzeichnet, dass** es sich bei dem Amin R₁(-NH₂)ₙ (II) um ein Oligomer auf Basis von Polyalkylenimin, wobei das Alkylen vorzugsweise Ethylen, Propylen oder Butylen (Tetramethylen), weiter bevorzugt Ethylen, ist, oder um ein Polyetheramin oder ein Polyamidamin oder ein Polyesteramidamin oder ein Amin-Epoxid-Additionspräpolymer oder ein Amin handelt, das als Rest R₁ eine Fettkette aufweist, die einem Fettsäuredimer oder -trimer entspricht oder darauf basiert.

20. Oligomer gemäß einem der Ansprüche 15 oder 16, **dadurch gekennzeichnet, dass** das Oligomer zusätzlich zu den Acrylat- und/oder Methacrylatgruppen freie Hydroxylgruppen, vorzugsweise wenigstens 2 je Oligomer, trägt.

21. Urethanoligomer gemäß einem der Ansprüche 3 bis 20, **dadurch gekennzeichnet, dass** es das Produkt der folgenden sukzessiven Reaktionen ist:
i) Carbonat-Amin-Reaktion zwischen einem cyclischen Carbonat (III), das in seinem Ring den Rest -CH(R₂)-(CH₂)r-CH(R₂)- umfasst, und einem Amin R₁(-NH₂)ₙ (II) unter Bildung von n Urethangruppen, die vom Rest R₁ getragen werden, wobei jede Urethangruppe an Position β ein Hydroxyl aufweist,
ii) Veresterung von wenigstens einer der Hydroxylgruppen, erzeugt an Position β der Bindung, vorzugsweise von allen Hydroxylgruppen, mittels einer cyclischen Anhydridverbindung (IV), die in ihrem Ring einen zweiwertigen organischen Rest R₃ umfasst, unter Bildung einer Estersäuregruppe anstelle des Hydroxyls,
iii) Reaktion der Säuregruppen besagter Estersäuregruppe mit einer epoxidierten Verbindung (V), umfassend m Epoxidvorläufergruppen des Rests R₄ und getragen von einem organischen Rest R₅ der Wertigkeit m, wobei m wenigstens 2 ist, und zwar unter Bildung der Estersäure von einem Ester, der m' = m-1 Epoxidgruppen trägt, anstelle von jeder Säuregruppe, wobei anschließend an die Reaktion iii) die
iv) Reaktion der m-1 Epoxidgruppen der besagten Ester-Epoxidgruppe mit Acryl- und/oder Methacrylsäure folgt,
oder wobei optional, in der Reaktion iii) die epoxidierte Verbindung (V) ersetzt wird durch die acrylierte und/oder methacrylierte Verbindung (VI), aufweisend m-1 acrylierte und/oder methacrylierte Epoxidgruppen (Gemisch, falls m' = m-1 > 1), vor der Reaktion iii) oder gleichzeitig mit der Reaktion iii), und in diesem letzteren Falle durch gleichzeitige Reaktion zwischen der Epoxidverbindung (V) und der Acryl- und/oder Methacrylsäure bei einem Molverhältnis von m' = m-1 Mol Acryl- und/oder Methacrylsäure je Mol der Epoxidverbindung (V), in welchem Fall (gleichzeitige Reaktion), die nachgeschaltete Reaktion gemäß iv) nicht stattfindet,
wobei R₁, R₂, R'₂, R₃, R₄, R₅, n, r und m wie gemäß Anspruch 3 definiert sind.

22. Verfahren zur Herstellung eines Oligomers, wie definiert gemäß einem der Ansprüche 1 bis 21, **dadurch gekennzeichnet, dass** es wenigstens die folgenden Schritte umfasst:
i) Carbonat-Amin-Reaktion zwischen einem cyclischen Monocarbonat (Carbonat) (III) und einem Monoamin oder Polyamin (II) der Funktionalität n an primärem Amin, unter Bildung von n Urethangruppen und, je Urethangruppe, einer Hydroxylgruppe an Position β der besagten Bindung,
ii) Veresterung von wenigstens einer der Hydroxylgruppen, erzeugt an Position β der besagten Urethanbindung, vorzugsweise von allen Hydroxylgruppen, mittels einer cyclischen Anhydridverbindung (IV), unter Bildung einer Estersäuregruppe anstelle des Hydroxyls an Position β,
iii) Reaktion der Säuregruppe der Estersäuregruppe mit einer Epoxidgruppe einer Polyepoxidverbindung (V), die m Epoxidgruppen trägt, wobei m gleich wenigstens 2, wobei jeder gebildete neue Ester m' = m-1 Epoxidgruppen trägt,
iv) Reaktion der m' = m-1 Epoxidgruppen mit Acryl- und/oder Methacrylsäure unter Bildung von m' Acrylat- und/oder Methacrylatgruppen
mit der optionalen Alternative für Schritt iii)
iiia) die Polyepoxid-(Epoxid)-Verbindung (V) wird durch ihr acryliertes und/oder methacryliertes Äquivalent (VI) ersetzt, aufweisend m' = m-1 bereits voracrylierte und/oder vormethacrylierte Epoxidgruppen (Acrylat/Methacrylat Gemisch, falls vor der Reaktion iii))
oder
iiib) die acrylierte oder methacrylierte Verbindung (VI) wird gleichzeitig mit der Reaktion iii) gebildet und, in diesem Fall, durch Reaktion zur gleichen Zeit mit jener von Schritt iii), zwischen der Epoxidverbindung (V) und der Acryl- oder Methacrylsäure und in einem Molverhältnis von m-1 Mol Acryl- oder Methacrylsäure je Mol der Epoxidverbindung (V),
in welchem Fall, gemäß Optionen iiia) oder iiib), der Schritt iv) nicht stattfinden muss.

23. Herstellungsverfahren gemäß Anspruch 22, **dadurch gekennzeichnet, dass** das Oligomer gemäß einem der Ansprüche 15 oder 16 definiert ist und dass wenigstens eine der n1 bzw. n2 Hydroxylegruppen, die von dem Amin R₁(NH₂)ₙ getragen werden, ebenfalls gemäß der Reaktionen der Schritte i), ii), iii) oder iv), wie gemäß Anspruch 21 definiert, zu Acrylaten und/oder Methacrylaten umgewandelt wird.

24. Polymerisierbare und insbesondere vernetzbare Zusammensetzung, **dadurch gekennzeichnet, dass** sie wenigstens ein Oligomer umfasst, das wie gemäß einem der Ansprüche 1 bis 21 definiert ist oder durch ein Verfahren, wie gemäß Anspruch 22 oder 23 definiert, erhalten wird.

25. Zusammensetzung gemäß Anspruch 24, **dadurch gekennzeichnet, dass** es sich um eine vernetzbare Zusammensetzung handelt, insbesondere ausgewählt aus:
einer Beschichtungszusammensetzung, im Genaueren einer Anstrich-, Lack-, Druckfarben-, Klebstoff- und Gelbeschichtungs-Zusammensetzung (« Gelcoat »), oder einer Zusammensetzung für schichtweise (dreidimensionale) 3D-Objekte oder einer Formgießzusammensetzung oder einer Kompositzusammensetzung oder einer Dichtungsmassen-Zusammensetzung oder einer Zusammensetzung zum chemischen Versiegeln.

26. Zusammensetzung gemäß Anspruch 24, **dadurch gekennzeichnet, dass** es sich um eine polymerisierbare Zusammensetzung für die Herstellung eines Pfropfpolymers handelt, vorzugsweise umfassend, zusätzlich zu dem Oligomer gemäß einem der Ansprüche 1 bis 21, wenigstens ein Comonomer, das auf radikalischem Wege, vorzugsweise mittels Bestrahlung, insbesondere mit UV, und mittels Peroxid, oder auf dualem Wege, wobei eine Vernetzungsreaktion durch Kondensation und eine radikalische Reaktion überlagernd angewandt werden können, copolymerisierbar ist.

27. Verwendung eines Oligomers, wie gemäß einem der Ansprüche 1 bis 21 definiert, als polymerisierbares Urethan-Bindemittel, **dadurch gekennzeichnet, dass** sie von jeglicher Verwendung von Isocyanat frei ist, und insbesondere von jeglicher Verwendung von Isocyanat und Katalysator auf Zinnbasis, vorzugsweise ab der Herstellung und bis zur Endanwendung des Oligomers, frei ist.

28. Verwendung gemäß Anspruch 27, **dadurch gekennzeichnet, dass** das Oligomer eine Gesamtfunktionalität an Acrylaten und/oder Methacrylaten von wenigstens 2 aufweist, und dass es als vernetzbares Bindemittel in vernetzbaren Zusammensetzungen, insbesondere ausgewählt aus Beschichtungszusammensetzungen, wie Anstrich-, Lack-, Druckfarben-, Klebstoff- und Gelbeschichtungs-Zusammensetzungen (« Gelcoat »), oder in Zusammensetzungen für schichtweise (dreidimensionale) 3D-Objekte oder in Formgießzusammensetzungen oder in Kompositzusammensetzungen oder in Dichtungsmassen-Zusammensetzungen oder in Zusammensetzungen zum chemischen Versiegeln verwendet wird.

29. Verwendung von wenigstens einem Oligomer, wie definiert gemäß Anspruch 21, als organisches Bindemittel in einer Zusammensetzung, die auf dualem und/oder hybridem Wege, insbesondere auf radikalischem Wege, wie mittels Bestrahlung und/oder Peroxid, und auf dem Wege der Kondensation mit einem Dianhydrid oder Polyisocyanat oder Melamin oder Silan, vernetzbar ist.

30. Verwendung gemäß Anspruch 27, **dadurch gekennzeichnet, dass** das Oligomer monofunktionell ist, wie gemäß Anspruch 4 definiert, und dass es als Makromonomer bei der Herstellung von Pfropfpolymeren verwendet wird.

31. Produkt oder Fertigungserzeugnis, **dadurch gekennzeichnet, dass** es unter Verwendung von wenigstens einem Oligomer, wie definiert gemäß einem der Ansprüche 1 bis 21, erhalten wird und insbesondere ausgewählt ist aus: Beschichtung, schichtweise erhaltenem 3D-Objekt, Formteil, Kompositmaterial, Dichtungsbauteil oder chemischer Versiegelung.

## Claims

1. A urethane oligomer, which can be linear or branched, carrying at least p acrylate or methacrylate end groups, **characterized in that** said urethane bond is obtained without use of isocyanate by the carbonate-amine reaction between n mol of cyclic monocarbonate (carbonate) (III) and one mol of an amine (II) of n primary amine functionality which is a monoamine or polyamine, with subsequently the conversion of at least one of the n hydroxyls formed in the β position with respect to each of the n urethane bonds, preferably of all said n hydroxyls, into ester-acids by equimolar reaction with a cyclic anhydride compound (IV), which reaction is followed by the (complete) conversion of said acid functional groups into p acrylate or methacrylate end groups by reaction with a polyepoxide compound (V) carrying m epoxide functional groups, with m equal at least to 2, m' = m-1 epoxide groups of which being converted into acrylate and/or methacrylate esters, and with the final functionality p being at least equal to m' and preferably with p being equal to m'*n for a complete conversion of said hydroxyls.

2. The oligomer as claimed in claim 1, **characterized in that** said conversion of said hydroxyls is a complete conversion and said overall functionality p is equal to m'*n (if a partial conversion x, in this case p = m'*x*n).

3. The oligomer as claimed in claim 2, **characterized in that** it comprises or consists of the product of the following general formula (I):
R₁[-NH-(C=O)-O-CH(R₂)-(CH₂)ᵣ-CH(R'₂)-O-(O=C)-R₃-(C=O)-O-R₄-R₅(-R₄-R₆)_{m'}]ₙ (I)
with:
- R₁: hydrocarbyl of valence n in said amine compound (II), carrying n amine -NH₂ groups,
- R₂ or R'₂: substituents which are identical or different and interchangeable in their position, which can be chosen from: H, alkyl or hydroxyalkyl, said alkyl being a C₁ to C₃ alkyl, with it being possible for R₂ and R'₂ to be located on two neighboring carbons, if r = 0, or on two carbons separated by a methylene, if r = 1, with it also being possible for the combined radical -CH(R₂)-(CH₂)ᵣ-CH(R'₂)- to represent a C₅ or C₆ cycloalkylene radical forming, at the start (before reaction), part of the ring of said cyclic carbonate compound (III),
- R₃: alkylene radical, in particular C₂ alkylene radical, cycloalkylene radical or arylene radical which can be substituted, in particular by an alkyl from methyl or ethyl or by a halogen, such as chlorine, or by an alkoxy or be unsubstituted, R₃ forming, at the start (before reaction), part of an anhydride ring of a cyclic anhydride compound (IV),
- R₄-R₅(-R₄-)_{m'} being the hydrocarbyl residue of overall valence m (m' = m-1), corresponding to said epoxide compound (V) after reaction of the m epoxide groups, with R₄ representing the -CH₂-CH(OH)- radical, the precursor of which is an epoxy (oxirane) group, and R₅ being the hydrocarbyl radical of valence m in said epoxide compound (V) carrying, at the start, m precursor epoxide (oxirane) groups of said radical R₄, it being possible for said compound (V) to be, inter alia, a hydrocarbon chain epoxidized on the carbons forming said chain,
- R₆: CH₂=C(R₇)-(C=O)-O- being acrylate when R₇ is -H or methacrylate when R₇ is -CH₃ or a mixture of two groups, acrylate and methacrylate, for p > 1,
said oligomer being monofunctional, that is to say having m'*n equal to 1, or multifunctional, that is to say having p = m'*n equal to 2 or greater than 2.

4. The oligomer as claimed in one of claims 1 to 3, **characterized in that** said oligomer is monofunctional with p = m'*n = 1, m' = 1 and n = 1.

5. The oligomer as claimed in one of claims 1 to 3, **characterized in that** said oligomer is multifunctional and of functionality p = m'*n = 2 or greater than 2 with m' ≥ 1 and n ≥ 2.

6. The oligomer as claimed in one of claims 1 to 3, **characterized in that** said oligomer is multifunctional and of functionality p = m'*n = 2 or greater than 2 with m' ≥ 2 and n ≥ 1.

7. The oligomer as claimed in claim 5 or 6, **characterized in that** said oligomer is multifunctional and of functionality p = m'*n ranging from 2 to 32 and preferably from 2 to 16, more preferably from 2 to 8 and in particular from 2 to 6.

8. The oligomer as claimed in one of claims 1 to 7, **characterized in that** said cyclic anhydride compound (IV) is selected from the following cyclic monoanhydrides: succinic (R₃: ethylene), maleic (R₃: vinylene), phthalic (R₃: 1,2-phenylene), itaconic, chlorendic, nadic, tetrahydrophthalic, hexahydrophthalic, methylhexahydrophthalic, methyltetrahydrophthalic, naphthenic dicarboxylic, glutaric, trimellitic, adipic, sebacic or dodecylsuccinic anhydride and preferably succinic, maleic, itaconic, phthalic, tetrahydrophthalic, hexahydrophthalic, methylhexahydrophthalic or methyltetrahydrophthalic anhydrides.

9. The oligomer as claimed in one of claims 1 to 8, **characterized in that** said cyclic carbonate (III) is chosen from carbonates of ethylene glycol (R₂ = R'₂: -H and r = 0), of 1,2-propylene diol (R₂ = -H, R'₂: -CH₃, r = 0), of 1,3-propylene diol (R₂ = R'₂: -H, r = 1), of glycerol (R₂: H, R'₂: -CH₂-OH, r = 0), of 1,2-butanediol (R₂: -H and R'₂: -CH₂CH₃), of 2,3-butanediol (R₂ and R'₂: -CH₃) and of 1,3-butanediol (R₂ or R'₂ = -CH₃ and r = 1) or the carbonate corresponding to a glycidyl ether of C₁-C₄ alcohol or of phenol, by addition of CO₂ to the corresponding epoxide, and preferably of ethylene glycol, of 1,2-propylene glycol, of glycerol or of 1,2-butanediol.

10. The oligomer as claimed in one of claims 1 to 9, **characterized in that** said epoxide compound (V) is a diepoxide monomer from: ethylene glycol diglycidyl ether, propylene glycol diglycidyl ether, butanediol diglycidyl ether, neopentyl glycol diglycidyl ether, hexanediol diglycidyl ether, cyclohexanedimethanol diglycidyl ether, hydrogenated or nonhydrogenated bisphenol A diglycidyl ether (BADGE), hydrogenated or nonhydrogenated bisphenol F diglycidyl ether (BFDGE), these compounds optionally being alkoxylated, or terephthalic acid diglycidyl ester, tetrahydrophthalic acid diglycidyl ester or hexahydrophthalic acid diglycidyl ester.

11. The oligomer as claimed in one of claims 1 to 9, **characterized in that** said epoxide compound (V) is a triepoxide selected from: trimethylolpropane triglycidyl ether, glycerol triglycidyl ether or triglycidyl isocyanurate, or a tetraepoxide selected from: pentaerythritol tetraglycidyl ether or ditrimethylolpropane tetraglycidyl ether, or a hexafunctional, such as dipentaerythritol hexaglycidyl ether, all these compounds optionally being alkoxylated.

12. The oligomer as claimed in one of claims 1 to 9, **characterized in that** said epoxy compound (V) is an epoxy resin with a number-average weight Mn < 1000, preferably < 600, chosen from: epoxidized, linear or branched, phenol-formaldehyde (novolac) resins, epoxidized oils, in particular epoxidized soybean oil, epoxidized polybutadiene or epoxidized condensation or addition prepolymer, in particular an amine-epoxy precondensate with epoxide end groups.

13. The oligomer as claimed in one of claims 1 to 12, **characterized in that** said amine R₁(NH₂)ₙ (II) is of monomer or oligomer structure, preferably a C₂ to C₅₄, in particular C₂ to C₃₆, aliphatic amine or an arylaliphatic amine or a cycloaliphatic amine.

14. The oligomer as claimed in one of claims 1 to 12, **characterized in that** said amine R₁(NH₂)ₙ (II) is a monoamine monourethane or a diamine diurethane, which are the condensation products of a primary diamine with respectively a cyclic monocarbonate, which may be identical to or different from said cyclic carbonate compound (III) as defined according to claim 1 or 9, or a cyclic dicarbonate (carrying two cyclic carbonates groups), and correspond to a ratio of primary amine groups to cyclic carbonates groups of 2.

15. The oligomer as claimed in claim 14, **characterized in that** n₁ = n hydroxyls per amine compound (II) are present in the β position with respect to the urethane bond formed by carbonate-amine reaction in said monoamine urethane or in said diamine diurethane and that these n₁ = n hydroxyls are also converted, for at least one group among them and preferably completely, by successive reactions with said cyclic anhydride (IV) as defined according to one of claims 1, 3 or 8, into ester-acid groups, followed by the conversion of said acid functional groups into at least m' additional acrylated or methacrylated end groups by reaction with said polyepoxide compound (V) as defined according to one of claims 1, 3 or 10 to 12, with in this case an additional acrylate or methacrylate group (functional group) functionality of said oligomer equal to at least m' and preferably, for a complete conversion of said n₁ hydroxyls, with an additional functionality equal to m'*n₁ = m'*n.

16. The oligomer as claimed in one of claims 1 to 14, **characterized in that** said amine R₁(-NH₂)ₙ comprises, in said radical R₁, at least n₂ hydroxyls different from the hydroxyls formed in the β position with respect to a urethane bond by amine-carbonate reaction and that said n₂ hydroxyls are also converted by successive reactions with said cyclic anhydride (IV) as defined according to one of claims 1, 2 or 7 into as many ester-acid groups, followed by the conversion of said acid functional groups into m'*n₂ additional acrylated or methacrylated end groups by reaction with said polyepoxide compound (V) as defined according to one of claims 1, 2 or 9 to 11, with in this case the overall acrylate or methacrylate group (functional group) functionality thus being increased by m'*n₂.

17. The oligomer as claimed in claim 15 or 16, **characterized in that** at least one of said n₁ hydroxyls as defined according to claim 15 or n₂ hydroxyls as defined according to claim 15 are converted to said acrylates or methacrylates with the respective additional functionality being at least m'.

18. The oligomer as claimed in claim 13, **characterized in that** said amine R₁(-NH₂)ₙ (II) is an oligomer having a number-average weight Mn of less than 1500, preferably of less than 750, of linear or branched or hyperbranched or dendrimer structure.

19. The oligomer as claimed in claim 18, **characterized in that** said amine R₁(-NH₂)ₙ (II) is an oligomer based on polyalkyleneimine, with said alkylene preferably being ethylene, propylene or butylene (tetramethylene), more preferably ethylene, or a polyether amine or a polyamide amine or a polyesteramide amine or an amine-epoxide addition prepolymer or an amine having as R₁ radical, a fatty chain corresponding to or based on fatty acid dimer or of trimer.

20. The oligomer as claimed in either of claims 15 and 16, **characterized in that** said oligomer carries, in addition to the acrylate and/or methacrylate groups, free hydroxyl groups, preferably of at least 2 per oligomer.

21. The urethane oligomer as claimed in one of claims 3 to 20, **characterized in that** it is the product of the following successive reactions:
i) carbonate-amine reaction between a cyclic carbonate (III) including, in its ring, the -CH(R₂)-(CH₂)ᵣ-CH(R₂)- radical and an amine R₁(-NH₂)ₙ (II) with formation of n urethane groups carried by the R₁ radical, each urethane group having an hydroxyl in the β position,
ii) esterification of at least one of the hydroxyl groups generated in the β position with respect to said bond, preferably of all said hydroxyls, by a cyclic anhydride compound (IV) including, in its ring, a divalent organic radical R₃, with formation in place of said hydroxyl of an ester-acid group,
iii) reaction of the acid groups of said ester-acid group with an epoxide compound (V) carrying m epoxide groups which are precursors of the R₄ radical and which are carried by an organic radical R₅ of valence m, with m being at least 2, and with formation in place of each acid group of said ester-acid of an ester carrying m' = m-1 epoxide groups, said reaction iii) being followed by
iv) reaction with acrylic and/or methacrylic acid of said m-1 epoxide groups of said ester-epoxide group,
or, optionally, in said reaction iii), said epoxide compound (V) is replaced by the acrylated and/or methacrylated compound (VI) having m-1 acrylated and/or methacrylated epoxide groups (mixture if m' = m-1 > 1) before said reaction iii) or simultaneously with said reaction iii) and, in the latter case, by simultaneous reaction between said epoxide compound (V) and acrylic and/or methacrylic acid in a molar ratio of m' = m-1 mol of acrylic and/or methacrylic acid per mole of said epoxide compound (V), in which case (simultaneous reaction) said subsequent reaction according to iv) does not take place,
with R₁, R₂, R'₂, R₃, R₄, R₅, n, rand m being as defined according to claim 3.

22. A process for the preparation of an oligomer as defined according to one of claims 1 to 21, **characterized in that** it comprises at least the following stages:
i) carbonate-amine reaction between a cyclic monocarbonate (carbonate) (III) and a monoamine or polyamine (II) of primary amine functionality n with formation of n urethane groups and, per urethane group, of an hydroxyl in the β position with respect to said bond,
ii) esterification of at least one of said hydroxyl groups generated in the β position with respect to said urethane bond, preferably of all said hydroxyls, by a cyclic anhydride compound (IV) with formation, in place of said hydroxyl in the β position, of an ester-acid group,
iii) reaction of the acid group of said ester-acid group with an epoxide group of a polyepoxide compound (V) carrying m epoxide groups with m equal to at least 2, with each new ester formed carrying m' = m-1 epoxide groups,
iv) reaction, with acrylic acid and/or methacrylic acid, of said m' = m-1 epoxide groups in order to form m' acrylate and/or methacrylate groups,
with as optional alternative for said stage iii),
iiia) said polyepoxide (epoxide) compound (V) is replaced with its acrylated and/or methacrylated equivalent (VI) having m' = m-1 epoxide groups already preacrylated and/or premethacrylated (acrylate/methacrylate mixture if before said reaction iii)),
or
iiib) said acrylated or methacrylated compound (VI) is formed simultaneously with said reaction iii) and in this case by reaction, simultaneously with that of stage iii), between said epoxide compound (V) and acrylic or methacrylic acid and in a molar ratio of m-1 mol of acrylic or methacrylic acid per mole of said epoxide compound (V),
in which case, according to options iiia) or iiib), said stage iv) has no reason to exist.

23. The preparation process as claimed in claim 22, **characterized in that** said oligomer is defined according to either of claims 14 and 15 and that at least one of the respectively n₁ or n₂ hydroxyls carried by said amine R₁(NH₂)ₙ are also converted into acrylates and/or methacrylates according to the reactions of stages i), ii), iii) or iv) as defined according to claim 21.

24. A polymerizable, in particular crosslinkable, composition, **characterized in that** it comprises at least one oligomer as defined according to one of claims 1 to 21 or obtained by a process as defined according to claim 22 or 23.

25. The composition as claimed in claim 24, **characterized in that** it is a crosslinkable composition, in particular chosen from: a coating composition, more particularly a paint, varnish, ink, adhesive or gel coat composition, or a composition for 3D (three-dimensional) objects by successive layers or a molding composition or a composite composition or a leaktightness agent composition or a chemical sealing composition.

26. The composition as claimed in claim 24, **characterized in that** it is a polymerizable composition for the preparation of a grafted polymer preferably comprising, in addition to said oligomer as claimed in one of claims 1 to 21, at least one comonomer which can be copolymerized by the radical route, preferably by the radiation route, in particular UV radiation route, and by the peroxide route or by a dual route which can resort to a reaction of crosslinking by condensation, and a superimposed radical reaction.

27. The use of an oligomer as defined according to one of claims 1 to 21 as polymerizable urethane binder, **characterized in that** it is devoid of any use of isocyanate and more particularly devoid of any use of isocyanate and of tin-based catalyst, preferably from the preparation and as far as the final application included of said oligomer.

28. The use as claimed in claim 27, **characterized in that** said oligomer has an overall acrylate and/or methacrylate functionality of at least 2 and that it is used as crosslinkable binder in crosslinkable compositions, chosen in particular from coating compositions, such as paint, varnish, ink, adhesive and gel coat, or in compositions for 3D (three-dimensional) objects by successive layers or in molding compositions or in composite compositions or in leaktightness agent compositions or in chemical sealing compositions.

29. The use of at least one oligomer as defined according to claim 21 as organic binder in a composition which can be crosslinked by a dual and/or hybrid route, in particular by the radical route, such as radiation and/or peroxide, and by the condensation route with a dianhydride or polyisocyanate or melamine or silane.

30. The use as claimed in claim 27, **characterized in that** said oligomer is monofunctional as defined according to claim 4 and that it is used as macromonomer in the preparation of grafted polymers.

31. A finished product or article, **characterized in that** it is obtained by using at least one oligomer as defined according to one of claims 1 to 21, in particular chosen from: coating, 3D object obtained by successive layers, molded part, composite material, leaktight seal or chemical sealing.
